(19) Europäisches Patentamt
European Patent Office
Office européen des brevets

(11) EP 4 213 168 A1

(12) **EUROPEAN PATENT APPLICATION**
published in accordance with Art. 153(4) EPC

(43) Date of publication:
**19.07.2023 Bulletin 2023/29**

(21) Application number: **21866993.5**

(22) Date of filing: **27.07.2021**

(51) International Patent Classification (IPC):
*H01F 27/22* (2006.01)    *H01F 38/14* (2006.01)
*H02J 50/10* (2016.01)    *H01F 1/20* (2006.01)
*H01F 1/36* (2006.01)    *H02J 50/70* (2016.01)
*B60L 53/12* (2019.01)    *H02J 50/00* (2016.01)

(52) Cooperative Patent Classification (CPC):
**B60L 53/12; H01F 1/20; H01F 1/36; H01F 27/22;**
**H01F 38/14; H02J 50/00; H02J 50/10; H02J 50/70;**
Y02T 10/70; Y02T 10/7072; Y02T 90/14

(86) International application number:
**PCT/KR2021/009730**

(87) International publication number:
**WO 2022/055126 (17.03.2022 Gazette 2022/11)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.09.2020 KR 20200116410**
           **25.09.2020 KR 20200124743**
           **28.09.2020 KR 20200126225**

(71) Applicant: **SKC Co., Ltd.**
**Suwon-si, Gyeonggi-do 16338 (KR)**

(72) Inventors:
• **KIM, Nah Young**
  **Suwon-si, Gyeonggi-do 16338 (KR)**
• **LEE, Seunghwan**
  **Suwon-si, Gyeonggi-do 16338 (KR)**
• **CHOI, Jong Hak**
  **Suwon-si, Gyeonggi-do 16338 (KR)**
• **KIM, Tae Kyoung**
  **Suwon-si, Gyeonggi-do 16338 (KR)**

(74) Representative: **Dehns**
**St. Bride's House**
**10 Salisbury Square**
**London EC4Y 8JD (GB)**

(54) **WIRELESS CHARGING DEVICE AND MOVING MEANS INCLUDING SAME**

(57)    A wireless charging device according to the present invention comprises a hybrid-type magnetic unit including a first magnetic unit and a second magnetic unit and, by adjusting the magnetic permeability, inductance, and arrangement structure of the units, can effectively reduce a heat generated during high power density wireless charging and enhance charging efficiency. Therefore, the wireless charging device can be efficiently used in various fields of personal transportation means such as electric motorcycles, electric kickboards, electric scooters, electric wheelchairs, and electric bicycles, as well as fields requiring large-capacity power transmission such as electric vehicles.

EP 4 213 168 A1

[Fig. 1]

**Description**

Technical Field

The present invention relates to a wireless charging device and a transportation means comprising the same. More specifically, the embodiments relate to a wireless charging device with enhanced charging efficiency through a heat dissipation structure and a transportation means comprising the same.

Background Art

In recent years, the information and communication field is being developed at a very fast pace, and various technologies that comprehensively combine electricity, electronics, communication, and semiconductor are continuously being developed. In addition, as electronic devices tend to be more mobile, research on wireless communication and wireless power transmission technologies is being actively conducted in the communication field. In particular, research on a method for wirelessly transmitting power to electronic devices is being actively conducted.

Meanwhile, as interest in electric vehicles has rapidly increased in recent years, interest in building charging infrastructure is increasing. Various charging methods have already appeared, such as electric vehicle charging using home chargers, battery replacement, rapid charging devices, and wireless charging devices. A new charging business model has also begun to appear (see Korean Laid-open Patent Publication No. 2011-0042403). In addition, electric vehicles and charging stations that are being tested begin to stand out in Europe. In Japan, electric vehicles and charging stations are being piloted, led by automakers and power companies.

In a conventional wireless charging device used for electric vehicles, a magnetic unit is disposed adjacent to a coil unit to enhance the wireless charging efficiency, and a shield unit (metal plate) for shielding is disposed to be spaced apart from the magnetic unit by a predetermined interval.

A wireless charging device generates heat due to the resistance of the coil unit and the magnetic loss of the magnetic unit during the wireless charging operation. In particular, the magnetic unit in a wireless charging device generates heat in a part close to the coil unit with a high electromagnetic wave energy density. The generated heat may change the magnetic characteristics of the magnetic unit and cause an impedance mismatch between the transmitting pad and receiving pad, which deteriorates the charging efficiency. As a result, the generation of heat is, in turn, aggravated.

In particular, in a conventional wireless charging device, a sintered ferrite sheet as a magnetic unit is mainly disposed between the coil unit and the shield unit, particularly on one side close to the coil unit. A sintered ferrite sheet has low impact resistance and large specific gravity. If it is placed close to a coil unit, heat is generated from the coil unit and the sintered ferrite sheet during charging. In particular, the heat generated from the sintered ferrite sheet is hardly transferred and dissipated to the air or to a spacer unit having low thermal conductivity characteristics. As a result, the sintered ferrite sheet with an elevated temperature is deteriorated in magnetic properties, which changes the inductance value of the coil unit, resulting in a problem of deteriorating the charging efficiency and causing more severe heat generation.

In particular, if heat generation is increased during high-speed charging and high-power wireless charging, it may cause restrictions on usability due to safety issues. Thus, there is a need to develop a wireless charging device capable of simultaneously enhancing the heat generation reduction characteristics, heat dissipation characteristics, and charging efficiency at high power.

[Prior Art Document]

[Patent Document]

(Patent Document 1) Korean Laid-open Patent Publication No. 2011-0042403

**Disclosure of Invention**

**Technical Problem**

The present invention is devised to solve the problems of the prior art described above.

An object of the present invention is to provide a wireless charging device, which uses a hybrid-type magnetic unit of two or more types having different magnetic permeabilities and disposed in consideration of their characteristics, whereby it can enhance the charging efficiency and heat generation reduction characteristics during wireless charging.

Another object of the present invention is to provide a wireless charging device, which comprises a hybrid-type magnetic unit comprising a first magnetic unit and a second magnetic unit disposed adjacent to the first magnetic unit, both being different from each other, wherein a second inductance in a state where only the second magnetic unit remains and a first inductance in a state where only the first magnetic unit remains are designed to be different from each other, whereby it can enhance the charging efficiency and heat generation reduction characteristics during wireless charging at high power.

Still another object of the present invention is to provide a wireless charging device, which uses a hybrid-type magnetic unit of two or more types having different magnetic permeabilities, wherein the magnetic unit having a higher magnetic permeability is disposed at the center of the magnetic unit, whereby it can effectively dissipate the generated heat and enhance the charging efficiency and heat generation reduction characteristics during wireless charging.

Still another object of the present invention is to provide a transportation means comprising the wireless charging device.

**Solution to Problem**

The present invention provides a wireless charging device, which comprises a coil unit; and a magnetic unit disposed on the coil unit, wherein the magnetic unit comprises a first magnetic unit disposed on the coil unit; and a second magnetic unit disposed adjacent to the first magnetic unit and having a magnetic permeability different from that of the first magnetic unit.

In addition, the present invention provides a wireless charging device, which comprises a coil unit; and a magnetic unit disposed on the coil unit, wherein the magnetic unit comprises a first magnetic unit disposed on the coil unit; and a second magnetic unit disposed adjacent to the first magnetic unit, and a second inductance in a state where only the second magnetic unit remains and a first inductance in a state where only the first magnetic unit remains are different from each other.

In addition, the present invention provides a wireless charging device, which comprises a coil unit; and a magnetic unit disposed on the coil unit, wherein the magnetic unit comprises a first magnetic unit and a second magnetic unit, the second magnetic unit is located at the center of the magnetic unit, the entire surface or a circumferential surface of the second magnetic unit is surrounded by the first magnetic unit, and the magnetic permeability of the second magnetic unit is higher than the magnetic permeability of the first magnetic unit.

Further, the present invention provides a transportation means, which comprises the wireless charging device.

**Advantageous Effects of Invention**

According to an embodiment of the present invention, a hybrid-type magnetic unit of two or more types having different magnetic permeabilities is adopted, whereby it is possible to reduce heat generation and enhance charging efficiency during wireless charging. In particular, if the thicknesses and magnetic permeabilities of the first magnetic unit and the second magnetic unit in the hybrid-type magnetic unit are appropriately adjusted to control their composite magnetic permeability (CP), charging efficiency can be maximized, and heat generation reduction characteristics can be further enhanced.

According to another embodiment of the present invention, a hybrid-type magnetic unit of two or more types is adopted, and their inductances are designed to be different from each other, whereby it is possible to reduce heat generation and enhance charging efficiency during wireless charging. In particular, if the iron losses and magnetic permeabilities of the first magnetic unit and the second magnetic unit in the hybrid-type magnetic unit are appropriately adjusted to control their composite iron loss (Ci) to a specific range, charging efficiency can be maximized, and heat generation reduction characteristics can be further enhanced.

According to still another embodiment of the present invention, a hybrid-type magnetic unit of two or more types having different magnetic permeabilities is adopted, and the magnetic unit having a higher magnetic permeability is disposed at the center of the magnetic unit, whereby magnetic flux focused during wireless charging can be dispersed toward the center where the distribution of magnetic flux is relatively smaller. As a result, it is possible to effectively distribute magnetic flux and heat and to efficiently enhance heat generation reduction characteristics and wireless charging efficiency during wireless charging.

Accordingly, the wireless charging device can be advantageously used in electric vehicles that require large-capacity power transmission between a transmitter and a receiver, as well as various personal transportation means such as electric motorcycles, electric kickboards, electric scooters, electric wheelchairs, electric bicycles, and the like.

**Brief Description of Drawings**

Figs. 1 to 3 are each an exploded perspective view of a wireless charging device according to embodiments.

Figs. 4 and 6 are each a perspective view of a wireless charging device according to embodiments.

Figs. 7 to 17 are each a cross-sectional view of a wireless charging device according to various embodiments.

Fig. 18 is a schematic diagram showing the outer diameter (Od), inner diameter (Id), and thickness ($T_M$) of a magnetic unit for measuring the fundamental iron loss of the magnetic unit.

Figs. 19(a) and 19(b) are each a diagram for defining the structure of a second magnetic unit adopted in a wireless charging device.

Fig. 20 shows cross-sectional views of wireless charging devices of Examples 3-1 and 3-2 and Comparative Examples 3-1 to 3-3.

Fig. 21 is a graph showing the charging efficiency of the wireless charging device of Example 3-1 and Comparative Example 3-1 with respect to the charge holding time.

Fig. 22 is a graph showing the heat generation temperature in Example 3-1 and Comparative Example 3-1 with respect to the charge holding time.

Fig. 23 illustrates a process of forming a magnetic unit through a mold according to an embodiment.

Fig. 24 shows a transportation means (electric vehicle) provided with a wireless charging device according to an embodiment.

**Best Mode for Carrying out the Invention**

Hereinafter, specific embodiments for implementing the idea of the present invention will be described in detail with reference to the drawings.

Further, in the description of the present invention, if it is determined that a detailed description of a related known constitution or function may obscure the gist of the present invention, the detailed description thereof will be omitted.

In addition, in the accompanying drawings, some components are exaggerated, omitted, or schematically illustrated, and the size of each component does not fully reflect the actual size.

The terms in the present specification are used only to describe specific embodiments and are not intended to limit the present invention. A singular expression encompasses a plural expression unless the context clearly dictates otherwise.

The same reference numerals in the present specification refer to the same elements.

In the present specification, in the case where an element is mentioned to be formed "on" or "under" another element, it means not only that one element is directly formed "on" or "under" another element, but also that one element is indirectly formed on or under another element with other element(s) interposed between them.

In addition, the term on or under with respect to each element may be referenced to the drawings. For the sake of description, the sizes and thicknesses of individual elements in the appended drawings may be exaggeratedly depicted, and they may differ from the actual sizes.

In addition, the term "comprising," as used herein, specifies a particular characteristic, region, integer, step, operation, element, and/or component, and it does not exclude the presence or addition of other specific characteristic, region, integer, step, operation, element, component, and/or group.

In addition, all numbers expressing the physical properties, dimensions, and the like of elements used herein are to be understood as being modified by the term "about" unless otherwise indicated.

In the present specification, a singular expression is understood to encompass a singular or plural expression, interpreted in context, unless otherwise specified.

**[Wireless charging device]**

The wireless charging device according to an embodiment of the present invention comprises a coil unit; and a magnetic unit disposed on the coil unit, wherein the magnetic unit comprises a first magnetic unit disposed on the coil unit; and a second magnetic unit disposed adjacent to the first magnetic unit and having a magnetic permeability different from that of the first magnetic unit.

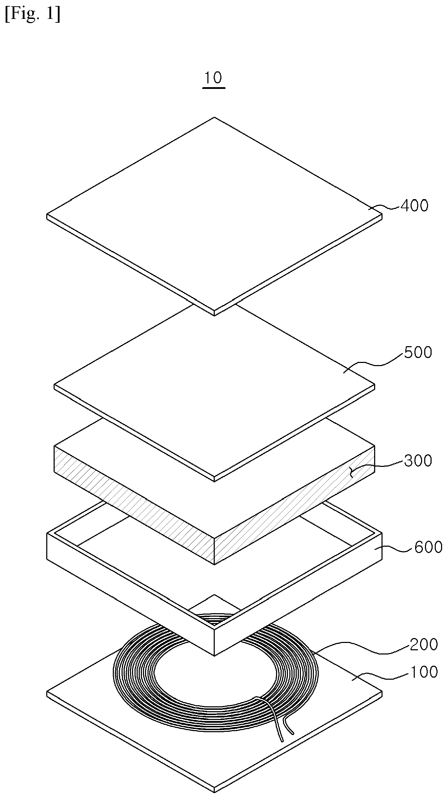

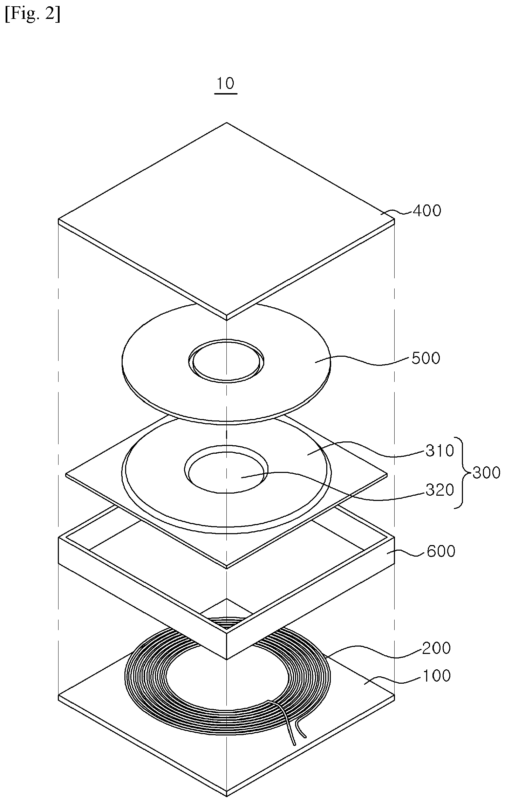

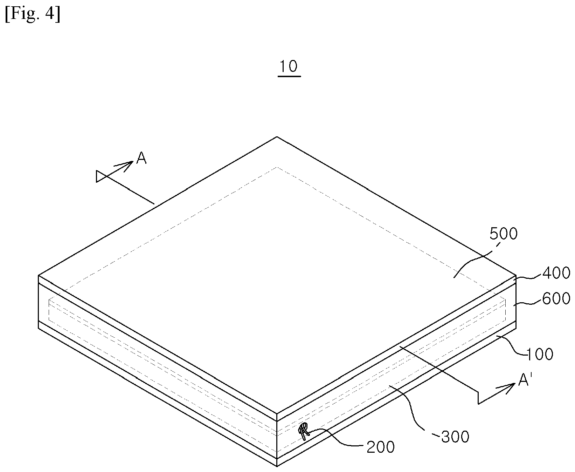

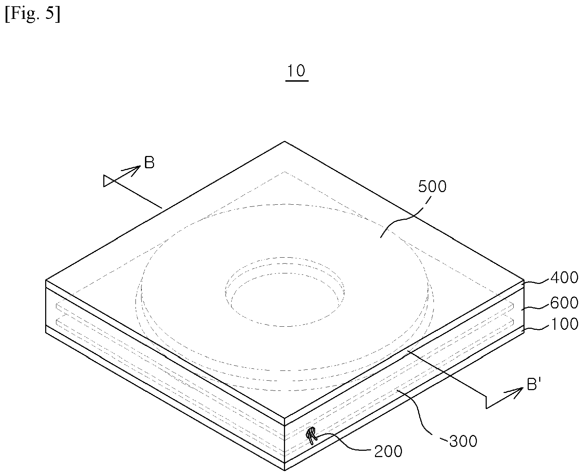

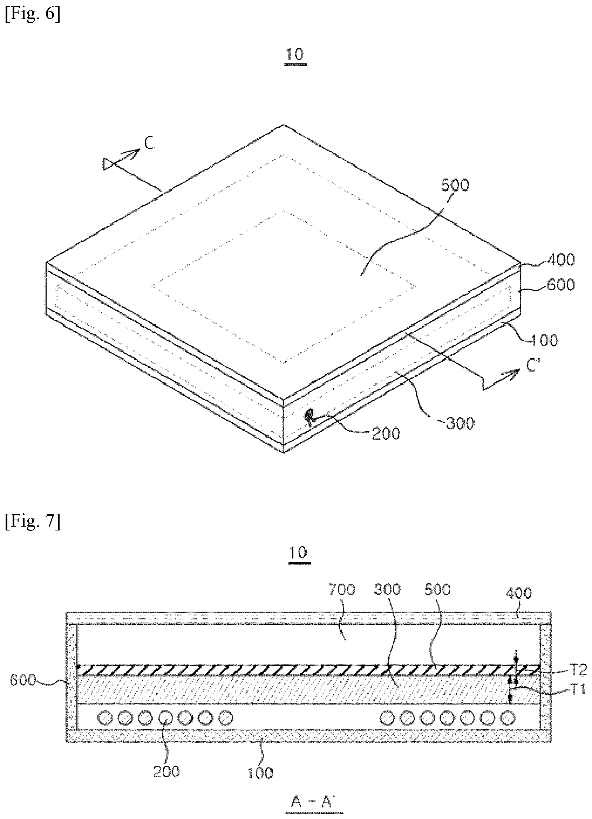

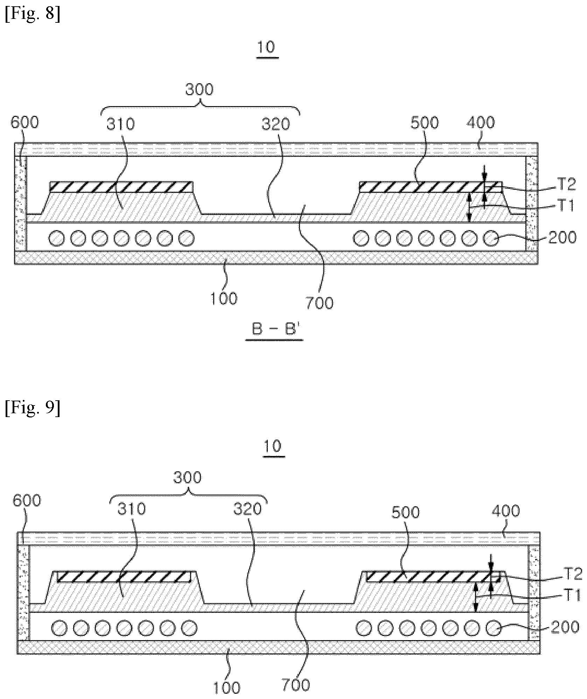

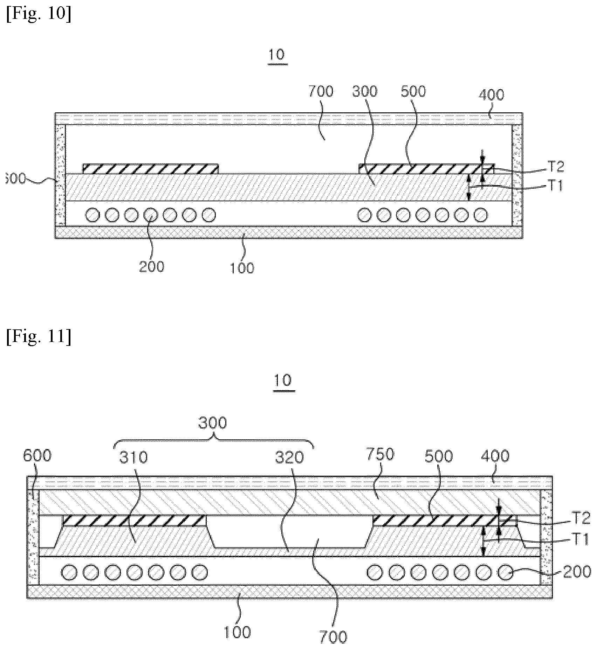

Figs. 1 and 2 are each an exploded perspective view of a wireless charging device according to embodiments. Figs. 4 and 5 are each a perspective view of a wireless charging device according to the embodiments. Figs. 7 and 8 are each a cross-sectional view of a wireless charging device according to the embodiments. In addition, Figs. 9 and 10 are each a cross-sectional view of a wireless charging device according to other embodiments.

The drawings are illustratively shown according to embodiments, and various changes may be made as long as they do not impair the effects of the present invention.

Referring to Figs. 1 and 2, the wireless charging device (10) according to an embodiment comprises a coil unit (200); and a magnetic unit disposed on the coil unit (200), wherein the magnetic unit comprises a first magnetic unit (300) disposed on the coil unit (200); and a second magnetic unit (500) disposed adjacent to the first magnetic unit (300) and having a magnetic permeability different from that of the first magnetic unit (300). In addition, the wireless charging device (10) may further comprise a support unit (100) for supporting the coil unit (200), a shield unit (400) disposed on the magnetic unit, and a housing (600) for protecting the components.

According to an embodiment of the present invention, a hybrid-type magnetic unit of two or more types having different magnetic permeabilities is adopted, whereby it is possible to reduce heat generation and enhance charging efficiency during wireless charging.

Meanwhile, if two or more magnetic units as a hybrid-type magnetic unit are used in combination while these magnetic units are simply stacked and disposed without special consideration, the magnetic flux is not properly distributed during wireless charging, whereby generated heat is not effectively transferred to the outside, and it may be easily damaged by an external impact that may be imposed during driving of the vehicle.

According to an embodiment of the present invention, a hybrid-type magnetic unit of two or more types having different magnetic permeabilities is adopted, whereby the magnetic flux that is focused during wireless charging can be distributed in a desired direction. In particular, among the magnetic units, a first magnetic unit having a lower magnetic permeability during wireless charging than that of the second magnetic unit is disposed on the coil unit, and the second magnetic unit is disposed adjacent to the first magnetic unit to control their composite magnetic permeability, whereby heat dissipation characteristics and charging efficiency can be maximized.

Specifically, Fig. 1 is a configuration diagram of a wireless charging device (10) according to an embodiment of the present invention, having a structure in which a first magnetic unit (300) and a second magnetic unit (500) are sequentially stacked. Here, the first magnetic unit (300) has a magnetic permeability lower than that of the second magnetic unit (500) at a frequency of 79 kHz to 90 kHz, specifically 85 kHz, and is disposed on a coil unit (200), and the second magnetic unit (500) having a magnetic permeability higher than that of the first magnetic unit (300) may be disposed close to a shield unit (400).

Fig. 2 is a configuration diagram of a wireless charging device (10) according to another embodiment of the present invention in which a first magnetic unit (300) has a three-dimensional structure, and a second magnetic unit (500) is disposed only in a region corresponding to a coil unit. Here, the first magnetic unit (300) has a magnetic permeability lower than that of the second magnetic unit (500) at a frequency of 79 kHz to 90 kHz, specifically 85 kHz, and is disposed on a coil unit (200), and the second magnetic unit (500) having a magnetic permeability higher than that of the first magnetic unit (300) may be disposed close to a shield unit (400). Here, the first magnetic unit (300) may comprise an outer part (310) corresponding to a part where the coil unit (200) is disposed; and a central part (320) surrounded by the outer part (310).

According to another embodiment of the present invention, in the hybrid-type magnetic unit of two or more types having different magnetic permeabilities, the thicknesses of the first magnetic unit and the second magnetic unit may be adjusted to control their composite magnetic permeability. In such a case, charging efficiency can be maximized, and heat generation reduction characteristics can be further enhanced.

The wireless charging device according to another embodiment of the present invention comprises a coil unit; and a magnetic unit disposed on the coil unit, wherein the magnetic unit comprises a first magnetic unit disposed on the coil unit; and a second magnetic unit disposed adjacent to the first magnetic unit, and a second inductance in a state where only the second magnetic unit remains and a first inductance in a state where only the first magnetic unit remains are different from each other.

In this regard, referring back to Figs. 1 and 2, the wireless charging device (10) according to an embodiment of the present invention comprises a coil unit (200); and a magnetic unit disposed on the coil unit (200), wherein the magnetic unit comprises a first magnetic unit (300) disposed on the coil unit (200); and a second magnetic unit (500) disposed adjacent to the first magnetic unit (300), and a second inductance in a state where only the second magnetic unit (500) remains and a first inductance in a state where only the first magnetic unit (300) remains are different from each other. In addition, the wireless charging device (10) may further comprise a support unit (100) for supporting the coil unit (200), a shield unit (400) disposed on the magnetic unit, and a housing (600) for protecting the components.

According to the embodiment, a hybrid-type magnetic unit of two or more types is adopted, and their inductances are designed to be different from each other, whereby it is possible to reduce heat generation and enhance charging efficiency during wireless charging.

Meanwhile, if two or more magnetic units as a hybrid-type magnetic unit are used in combination while these magnetic units are simply stacked and disposed without special consideration, or arranged without consideration of their physical properties, the magnetic flux is not properly distributed during wireless charging, whereby generated heat is not effectively transferred to the outside, and it may be easily damaged by an external impact that may be imposed during driving of the vehicle. In particular, inductance is a quantity that stands for the ratio of a reverse electromotive force generated by electromagnetic induction due to a change in the current flowing through a circuit. Their inductances can be an important factor in determining the charging efficiency.

According to an embodiment of the present invention, the first inductance refers to an inductance measured in a state where only the first magnetic unit remains in the magnetic unit (i.e., hybrid-type magnetic unit). The second inductance refers to an inductance measured in a state where only the second magnetic unit remains in the magnetic unit (i.e., hybrid-type magnetic unit). In such an event, if the first inductance and the second inductance are designed to be different from each other, charging efficiency can be remarkably enhanced.

The wireless charging device according to another embodiment of the present invention comprises a coil unit; and a magnetic unit disposed on the coil unit, wherein the magnetic unit comprises a first magnetic unit and a second magnetic unit, the second magnetic unit is located at the center of the magnetic unit, the entire surface or a circumferential surface of the second magnetic unit is surrounded by the first magnetic unit, and the magnetic permeability of the second magnetic unit is higher than the magnetic permeability of the first magnetic unit.

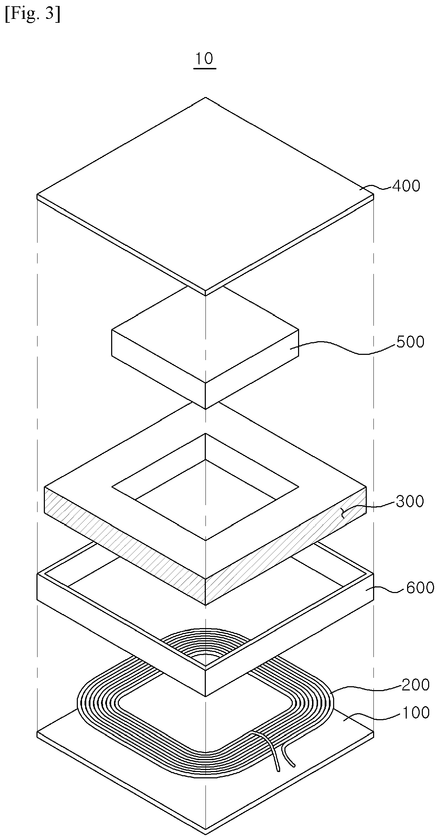

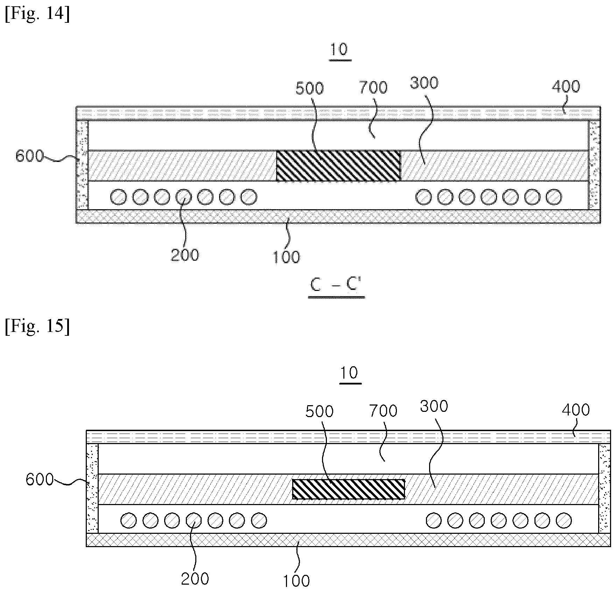

Fig. 3 is an exploded perspective view of a wireless charging device according to an embodiment. Fig. 6 is a perspective view of a wireless charging device according to the embodiment. Fig. 14 is a cross-sectional view of a wireless charging device according to the embodiment. In addition, Figs. 15 to 17 are each a cross-sectional view of a wireless charging device according to various embodiments.

The drawings are illustratively shown according to embodiments, and various changes may be made as long as they do not impair the effects of the present invention.

Referring to Fig. 3, the wireless charging device (10) according to an embodiment comprises a coil unit (200); and a magnetic unit disposed on the coil unit (200), wherein the magnetic unit comprises a first magnetic unit (300) and a second magnetic unit (500), the second magnetic unit (500) is located at the center of the magnetic unit, the entire surface or a circumferential surface of the second magnetic unit (500) is surrounded by the first magnetic unit (300), and the magnetic permeability of the second magnetic unit (500) is higher than the magnetic permeability of the first magnetic unit (300).

In general, for a wireless charging device comprising a coil unit and a magnetic unit, when a magnetic flux density is measured, magnetic flux is concentrated in a part corresponding to the coil unit, so that the magnetic flux density is high. In a part where the coil is not present, for example, at the center of the magnetic unit, a relatively low magnetic flux density is measured. In such a case, the magnetic flux is not evenly distributed, so that the heat generation is not balanced, that is, heat is intensively generated in a part corresponding to the coil unit with a high magnetic flux density. The generated heat may change the magnetic characteristics of the magnetic unit and cause an impedance mismatch between the transmitting pad and the receiving pad, which deteriorates the charging efficiency. As a result, the generation of heat may be, in turn, aggravated.

According to an embodiment of the present invention, a hybrid-type magnetic unit of two or more types (comprising a first magnetic unit and a second magnetic unit) having different magnetic permeabilities is adopted. Here, the second magnetic unit having a higher magnetic permeability than that of the first magnetic unit is disposed at the center of the magnetic unit, whereby magnetic flux focused during wireless charging can be dispersed toward the center where the distribution of magnetic flux is relatively smaller. As a result, the magnetic flux density of a part corresponding to the coil unit is lowered, and the magnetic flux density at the center without the coil unit is heightened, which evenly distributes magnetic flux and heat generation, whereby it is possible to efficiently enhance the heat generation reduction characteristics and wireless charging efficiency during wireless charging.

Hereinafter, each constitutional element of the wireless charging device will be described in detail.

**Magnetic unit**

According to an embodiment of the present invention, the magnetic unit may be a hybrid-type magnetic unit of two or more types comprising a first magnetic unit and a second magnetic unit having different magnetic permeabilities from each other.

In particular, the hybrid-type magnetic unit may comprise a first magnetic unit having high impact resistance and a weight reduction effect and a second magnetic unit having a strong magnetic focusing force.

The first magnetic unit may have greater impact resistance than the second magnetic unit (ferrite-based magnetic material) and may have a weight reduction effect. However, if the first magnetic unit alone is used instead of the hybrid-type magnetic unit, it may produce the effect of impact resistance and a reduction in weight, whereas the magnetic focusing force (inductance) is weak, thereby deteriorating the charging efficiency.

Meanwhile, although the second magnetic unit has a strong magnetic focusing force, it may be hardly processed to a large flat plate, and there may be limitations in manufacturing and processing it in the form of, for example, a thick layer for automobiles.

Thus, as the second magnetic unit having a strong magnetic focusing force is adopted together with the first magnetic unit having high impact resistance and a weight reduction effect, the performance of the wireless charging device can be efficiently enhanced.

In addition, as the second magnetic unit having a higher magnetic permeability at 85 kHz than that of the first magnetic unit in the hybrid-type magnetic unit is disposed adjacent to the first magnetic unit disposed on the coil unit, it is possible to control the composite magnetic permeability (CP) of the hybrid-type magnetic unit.

In the hybrid-type magnetic unit, the composite magnetic permeability (CP) represented by the following Equation 1 may be 101 to 290:

[Equation 1]

$$CP = \frac{1}{a} \times P1 \times \frac{T1}{T1+T2} + \frac{1}{b} \times P2 \times \frac{T2}{T1+T2}$$

In Equation 1,

P1 is the magnetic permeability of the first magnetic unit,
P2 is the magnetic permeability of the second magnetic unit,
T1 is the thickness of a region in the first magnetic unit corresponding to the coil unit,
T2 is the thickness of a region in the second magnetic unit corresponding to the coil unit,
a is 1 when P1 is 10 to 1,000, 10 when P1 is greater than 1,000 to 8,000, or 20 when P1 is greater than 8,000 to 30,000, and
b is 1 when P2 is 10 to 1,000, 10 when P2 is greater than 1,000 to 8,000, or 20 when P2 is greater than 8,000 to 30,000.

In the magnetic unit, the composite magnetic permeability (CP) may be, for example, 101 to 290, 101.5 to 280, 105 to 260, 105 to 250, 105 to 240, 105 to 235, 106 to 232, 110 to 230, 112 to 200, 115 to 200, 101 to 150, or 151 to 290.
In the magnetic unit, a wireless charging device designed by adjusting the composite magnetic permeability (CP) through the optimization of the thicknesses as well as the magnetic permeabilities of the first magnetic unit and the second magnetic unit can achieve a composite magnetic permeability (CP) within the above specific range. In such a case, it is possible to maximize the charging efficiency and heat reduction characteristics at high power.
If the wireless charging device satisfies Equation 1, the required inductance of the magnetic unit is satisfied, and the resistance is lowered, so that the performance of the wireless charging device, such as charging efficiency and heat reduction characteristics, can be efficiently improved. On the other hand, if the wireless charging device has a value less than the range of Equation 1, the lack of inductance required for a magnetic unit impairs the charging efficiency during wireless charging and heat reduction characteristics. If it exceeds the range of Equation 1, the resistance of the magnetic unit is increased, thereby deteriorating the wireless charging performance.
The thicknesses as well as the magnetic permeabilities of the first magnetic unit and the second magnetic unit may be adjusted to control the composite magnetic permeability (CP). Thus, the thicknesses of the first magnetic unit and the second magnetic unit, together with the magnetic permeabilities of the respective magnetic units, may be a very important factor in maximizing the effect according to an embodiment of the present invention.
In Equation 1, P1 may be 30 to 200 or 50 to 200, P2 may be 2,000 to 20,000 or 2,000 to 18,000, T1 may be 1 mm to 15 mm or 1 mm to 12 mm, and T2 may be 0.01 mm to 5 mm or 0.02 mm to 4 mm.
For example, in Equation 1, P1 may be 50 to 200, P2 may be 2,000 to 5,000, T1 may be 1 mm to 10 mm, and T2 may be 0.04 mm to 5 mm.
For example, in Equation 1, P1 may be 50 to 200, P2 may be 2,000 to 5,000, T1 may be 1 mm to 10 mm, and T2 may be 0.05 mm to 5 mm.
For example, in Equation 1, P1 may be 50 to 200, P2 may be 2,000 to 5,000, T1 may be 2 mm to 10 mm, and T2 may be 0.1 mm to 4 mm.
For example, in Equation 1, P1 may be 50 to 200, P2 may be 2,000 to 5,000, T1 may be 2 mm to 9.5 mm, and T2 may be 0.5 mm to 4 mm.
For example, in Equation 1, P1 may be 50 to 200, P2 may be 2,000 to 5,000, T1 may be 2 mm to 9.5 mm, and T2 may be 1 mm to 3 mm.
For example, in Equation 1, P1 may be 50 to 200, P2 may be 12,000 to 18,000, T1 may be 1 mm to 11 mm, and T2 may be 0.02 mm to 3 mm.
For example, in Equation 1, P1 may be 50 to 200, P2 may be 12,000 to 18,000, T1 may be 1 mm to 10.5 mm, and T2 may be 0.05 mm to 2.5 mm.
For example, in Equation 1, P1 may be 50 to 200, P2 may be 12,000 to 18,000, T1 may be 1 mm to 10 mm, and T2 may be 0.1 mm to 2.5 mm.
For example, in Equation 1, P1 may be 50 to 200, P2 may be 12,000 to 18,000, T1 may be 2 mm to 10 mm, and T2 may be 0.1 mm to 2 mm.
For example, in Equation 1, P1 may be 50 to 200, P2 may be 12,000 to 18,000, T1 may be 3 mm to 10 mm, and T2 may be 0.1 mm to 1.5 mm.
For example, in Equation 1, P1 may be 50 to 200, P2 may be 12,000 to 18,000, T1 may be 3 mm to 10 mm, and T2 may be 0.1 mm to 1 mm.

According to an embodiment of the present invention, in Equation 1, P1 may be 50 to 200, P2 may be 2,000 to 5,000, and the ratio of T1 and T2 (T1:T2) may be 1:0.0009 to 1.5, 1:0.008 to 1.5, 1:0.008 to less than 1, 1:0.008 to 0.7, 1:0.008 to 0.68, 1:0.009 to 0.68, 1:0.09 to 0.68, 1:0.1 to 0.67.

According to an embodiment of the present invention, in Equation 1, P1 may be 50 to 200, P2 may be 12,000 to 18,000, and the ratio of T1 and T2 (T1:T2) may be 1:0.009 to 0.9, 1:0.009 to 0.5, 1:0.009 to 0.3, 1:0.009 to 0.25, or 1:0.009 to 0.2.

If the ratio of T1 and T2 (T1:T2) satisfies the above range, the thickness ratio of the hybrid-type magnetic unit is optimized, whereby the performance of the wireless charging device can be efficiently enhanced.

The total thickness of T1 and T2 may be 1 mm to 15.0 mm, 1.02 mm to 15.0 mm, 1.02 mm to 13.0 mm, 1.05 mm to 13.0 mm, 3.0 mm to 12.0 mm, 4.0 mm to 11.0 mm, 5.0 mm to 10.5 mm, 5.0 mm to 8.0 mm, or greater than 8.0 mm to 10.5 mm. If the total thickness of T1 and T2 is too thick, the weight of the magnetic unit may increase, which may cause restrictions on the process or use thereof.

In the wireless charging device according to an embodiment of the present invention, the second magnetic unit may have a magnetic permeability higher than that of the first magnetic unit. In addition, the magnetic permeability of the second magnetic unit may be higher than the magnetic permeability of the first magnetic unit, and the thickness of a region in the first magnetic unit corresponding to the coil unit may be greater than the thickness of a region in the second magnetic unit corresponding to the coil unit.

The wireless charging device of the present invention can effectively reduce heat generation and enhance charging efficiency during high-power wireless charging of 3kW to 22kW, 4kW to 20kW, or 5kW to 18kW. Thus, it can be advantageously used for high-power wireless charging.

As the wireless charging device according to an embodiment of the present invention comprises a hybrid-type magnetic unit of two or more types comprising a first magnetic unit and a second magnetic unit, the physical properties may vary. In particular, as the types, thickness ratio, and magnetic permeabilities of the first magnetic unit and the second magnetic unit are designed to be optimized, the characteristics of the wireless charging device may be improved, as well as the charging efficiency and heat generation reduction characteristics can be enhanced.

In addition, in the hybrid-type magnetic unit, the second magnetic unit having a higher magnetic permeability than that of the first magnetic unit may be disposed close to the shield unit. In such a case, it is possible to effectively distribute the magnetic flux density and heat dissipation, thereby increasing the wireless charging efficiency, and to dissipate the heat generated from the second magnetic unit through the shield unit, thereby enhancing the heat dissipation characteristics.

As such, the characteristics of the wireless charging device may vary depending on the types, thicknesses, magnetic permeabilities, and arrangement design of the first magnetic unit and the second magnetic unit.

Meanwhile, the wireless charging device according to another embodiment of the present invention may comprise a hybrid-type magnetic unit comprising a first magnetic unit and a second magnetic unit disposed between the coil unit and the shield unit.

In the hybrid-type magnetic unit, the first magnetic unit may comprise a polymer-type magnetic block (PMB) comprising a binder resin and a magnetic powder dispersed in the binder resin, and the second magnetic unit may be at least one selected from the group consisting of nanocrystalline magnetic materials and ferrite-based magnetic materials.

The first magnetic unit has high impact resistance and a weight reduction effect, and the second magnetic unit has a strong magnetic focusing force.

In particular, in the hybrid-type magnetic unit, a second inductance in a state where only the second magnetic unit remains and a first inductance in a state where only the first magnetic unit remains may be different from each other.

According to the embodiment, a hybrid-type magnetic unit of two or more types is adopted, and their inductances are designed to be different from each other, whereby it is possible to reduce heat generation and enhance charging efficiency during wireless charging.

In addition, when the hybrid-type magnetic unit is adopted, the complex iron loss (Ci) of the magnetic unit may be lowered, thereby further enhancing the charging efficiency.

In addition, in the hybrid-type magnetic unit, since the first magnetic unit and the second magnetic unit have different inductances, magnetic properties, and heat generation amounts, heat can be effectively discharged to the outside according to a method in which the first magnetic unit and the second magnetic unit are arranged in combination.

In the wireless charging device according to an embodiment of the present invention, the composite iron loss (Ci) according to the following Equation 2 may be 1,200 $W/m^3$ or less:

[Equation 2]

$$Ci = 0.51 \times Lt \times (a/La + c/Lc)$$

In Equation 2,

a is the iron loss per measurement unit of the second magnetic unit,
c is the iron loss per measurement unit of the first magnetic unit,
Lt is the inductance measured in a state in which the first magnetic unit and the second magnetic unit are installed,
La is the second inductance, and
Lc is the first inductance.

In the present invention, the complex iron loss (Ci) refers to the sum of all losses occurring in the magnetic unit, that is, magnetic permeability loss and other losses, which may refer to a basic characteristic of the magnetic unit. Since the iron loss generally indicates the part that generates heat in an iron core, various structural methods have been devised, such as improving magnetic materials or forming multiple layers of thin slices insulated from each other, in order to reduce the iron loss as much as possible.

In the present invention, therefore, a hybrid-type magnetic unit comprising two different types of magnetic units is adopted in order to reduce the amount of loss, that is, iron loss, occurring in the magnetic unit.

However, when a hybrid-type magnetic unit is adopted as in the present invention, a calculated iron loss, that is, composite iron loss (Ci), is used instead of the intrinsic iron loss when each magnetic unit is adopted alone. That is, when a hybrid-type magnetic unit is adopted, it is affected by the thickness, volume, and inductance of the composite magnetic unit; thus, the composite iron loss (Ci) represented by Equation 2 should be used.

According to an embodiment of the present invention, when a polymer-type magnetic block (PMB) is adopted as the first magnetic unit, the intrinsic iron loss of the PMB may be large in the same magnetic field. On the other hand, when a hybrid-type magnetic unit in which the first magnetic unit is used together with the second magnetic unit is adopted, the magnetic characteristics such as magnetic permeability and magnetic permeability loss of the hybrid-type magnetic unit vary; thus, it is important to control the composite iron loss (Ci) within a specific range.

Since the complex iron loss (Ci) means iron loss per unit volume, its unit is $W/m^3$.

The complex iron loss (Ci) may be 1,200 $W/m^3$ or less, 1,190 $W/m^3$ or less, 1,180 $W/m^3$ or less, 1,100 $W/m^3$ or less, 1,050 $W/m^3$ or less, 1,000 $W/m^3$ or less, 900 $W/m^3$ or less, 800 $W/m^3$ or less, 700 $W/m^3$ or less, or 650 $W/m^3$ or less. The complex iron loss (Ci) may be 90 $W/m^3$ or more, 100 $W/m^3$ or more, 120 $W/m^3$ or more, 150 $W/m^3$ or more, 180 $W/m^3$ or more, or 200 $W/m^3$ or more.

If the composite iron loss (Ci) of the magnetic unit satisfies the above range, charging efficiency and heat generation reduction characteristics may be efficiently enhanced. If the complex iron loss (Ci) is outside the above range, heat generation and energy loss may increase, thereby reducing charging efficiency.

In addition, in the magnetic unit, the composite iron loss (Ci) may vary depending on the type of the second magnetic unit.

In the wireless charging device according to an embodiment of the present invention, the second magnetic unit may comprise a nanocrystalline magnetic material, and the composite iron loss (Ci) may be greater than 700 $W/m^3$ to 1,200 $W/m^3$. Specifically, in the wireless charging device, the second magnetic unit may comprise a nanocrystalline magnetic material, and the composite iron loss (Ci) may be greater than 800 $W/m^3$ to 1,200 $W/m^3$, greater than 900 $W/m^3$ to 1,200 $W/m^3$, greater than 1,000 $W/m^3$ to 1,200 $W/m^3$, 1,110 $W/m^3$ to 1,200 $W/m^3$, greater than 1,110 $W/m^3$ to 1,200 $W/m^3$, greater than 1,115 $W/m^3$ to 1,200 $W/m^3$, 1,120 $W/m^3$ to 1,200 $W/m^3$, or 1,120 $W/m^3$ to 1,190 $W/m^3$.

If the second magnetic unit comprises a nanocrystalline magnetic material, and the composite iron loss (Ci) of the magnetic unit satisfies the above range, charging efficiency and heat generation reduction characteristics may be efficiently enhanced. If the complex iron loss (Ci) is excessively high, heat may be generated, and charging efficiency may decrease.

According to another embodiment of the present invention, the second magnetic unit may comprise a ferrite-based magnetic material, and the composite iron loss (Ci) may be 300 $W/m^3$ to less than 1,120 $W/m^3$.

Specifically, the second magnetic unit may comprise a ferrite-based magnetic material, and the composite iron loss (Ci) may be 300 $W/m^3$ to 1,115 $W/m^3$, 300 $W/m^3$ to 1,100 $W/m^3$, 300 $W/m^3$ to 1,000 $W/m^3$, 300 $W/m^3$ to 800 $W/m^3$, 300 $W/m^3$ to 700 $W/m^3$, 350 $W/m^3$ to 700 $W/m^3$, 350 $W/m^3$ to 650 $W/m^3$, 400 $W/m^3$ to 650 $W/m^3$, or 450 $W/m^3$ to 630 $W/m^3$. If the second magnetic unit comprises a ferrite-based magnetic material, and the composite iron loss (Ci) of the magnetic unit satisfies the above range, charging efficiency and heat generation reduction characteristics may be efficiently enhanced.

If a polymer-type magnetic block, which is the first magnetic unit, rather than a hybrid-type magnetic unit, is adopted alone as a magnetic unit in a wireless charging device, the iron loss may be excessively increased to 2,000 $W/m^3$ or more, thereby steeply reducing charging efficiency.

According to an embodiment of the present invention, however, a polymer-type magnetic block, which is the first magnetic unit having an iron loss of 2,000 $W/m^3$ or more, is used together with the second magnetic unit to form a hybrid-type magnetic unit, which produces an advantage in that the iron loss of the magnetic unit may be lowered to 1,200 $W/m^3$ or less, at most 650 $W/m^3$ or less. In such a case, heat generation reduction characteristics and charging efficiency can be maximized.

In addition, if a ferrite-based magnetic block, which is the second magnetic unit, rather than a hybrid-type magnetic unit, is adopted alone as a magnetic unit in a wireless charging device, the iron loss can be lowered to 100 $W/m^3$ or less, thereby enhancing charging efficiency, whereas the saturation magnetic flux density is low, resulting in difficulties in achieving a large capacity.

The composite iron loss (Ci) represented by Equation 2 may be affected by the thickness and volume of the magnetic unit. For example, if a first magnetic unit having a large iron loss and a large thickness is used in the same magnetic field, the iron loss may appear to be low since the volume increases due to the thickness. For example, when the thickness of the first magnetic unit increases from 1 mm to 4 mm, the iron loss may appear to decrease. Thus, a correction constant is used in Equation 2.

The correction constant used according to the embodiment of the present invention is 0.51, which is a correction constant calculated in light of the thicknesses and volumes of the first magnetic unit and the second magnetic unit when the hybrid-type magnetic unit is adopted. In addition, if a magnetic unit has the same volume, the inductance may be the same. The magnetic unit may have a volume in the range of 100 $cm^3$ to 1,700 $cm^3$.

The composite iron loss (Ci) may be measured using the basic measurement iron loss (iron loss per measurement unit of the first magnetic unit or the second magnetic unit) and the inductance of each magnetic unit.

a and c are each basic measurement iron loss and refer to an iron loss per measurement unit of the second magnetic unit and iron loss per measurement unit of the first magnetic unit, respectively.

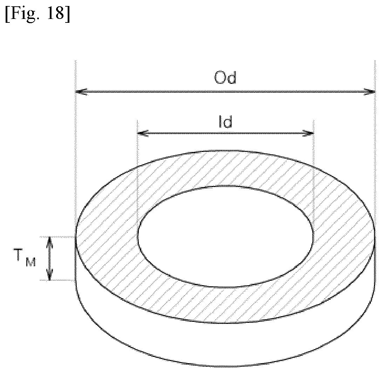

Referring to Fig. 18, a and c may be each measured for the first magnetic unit and the second magnetic unit having an outer diameter (Od) of 50 mm, an inner diameter (Id) of 30 mm, and a thickness ($T_M$) of 4 mm at 100 kHz and 100 mT using a B-H meter (B-H Anlyzer). Specifically, the magnetic unit of a wireless charging device is measured for the dimensions and weight, the relative density is calculated, and the strength of the wireless charging device is measured. Thereafter, the basic measurement iron loss may be measured at a DC magnetization and magnetic flux density of 0.1 T and a frequency of 100 kHz using a DC and AC B-H meter.

a may be 500 $W/m^3$ or less. Specifically, a may be 400 $W/m^3$ or less, 300 $W/m^3$ or less, 250 $W/m^3$ or less, 220 $W/m^3$ or less, 200 $W/m^3$ or less, 150 $W/m^3$ or less, or 100 $W/m^3$ or less. a may be 30 $W/m^3$ or more, 50 $W/m^3$ or more, 60 $W/m^3$ or more, 70 $W/m^3$ or more, 80 $W/m^3$ or more, 85 $W/m^3$ or more, or 90 $W/m^3$ or more.

According to an embodiment of the present invention, when a ferrite-based magnetic material is used as the second magnetic unit, a in Equation 2 as a basic measurement iron loss may be 200 $W/m^3$ or less, 150 $W/m^3$ or less, or 100 $W/m^3$ or less. a may be 30 $W/m^3$ or more, 50 $W/m^3$ or more, 60 $W/m^3$ or more, 70 $W/m^3$ or more, or 80 $W/m^3$ or more. a may be, for example, 30 $W/m^3$ to 200 $W/m^3$, 50 $W/m^3$ to 150 $W/m^3$, or 50 $W/m^3$ to 100 $W/m^3$.

According to an embodiment of the present invention, when a nanocrystalline magnetic material is used as the second magnetic unit, a in Equation 2 as a basic measurement iron loss may be 500 $W/m^3$ or less, 400 $W/m^3$ or less, 300 $W/m^3$ or less, 250 $W/m^3$ or less, or 220 $W/m^3$ or less. a may be 50 $W/m^3$ or more, 90 $W/m^3$ or more, 100 $W/m^3$ or more, 120 $W/m^3$ or more, 150 $W/m^3$ or more, or 180 $W/m^3$ or more. a may be, for example, 50 $W/m^3$ to 500 $W/m^3$, 100 $W/m^3$ to 400 $W/m^3$, or 150 $W/m^3$ to 250 $W/m^3$.

c is the iron loss per measurement unit (basic measurement iron loss) of the first magnetic unit having an outer diameter of 50 mm, an inner diameter of 30 mm, and a thickness of 4 mm when measured at 100 kHz and 100 mT using a B-H meter. c may be 500 $W/m^3$ or more. Specifically, c may be 600 $W/m^3$ or more, 800 $W/m^3$ or more, 900 $W/m^3$ or more, 1,000 $W/m^3$ or more, 1,100 $W/m^3$ or more, 1,500 $W/m^3$ or more, or 1,800 $W/m^3$ or more. c may be 5,000 $W/m^3$ or less, 4,500 $W/m^3$ or less, 4,000 $W/m^3$ or less, 3,500 $W/m^3$ or less, 3,000 $W/m^3$ or less, or 2,500 $W/m^3$ or less. c may be 500 $W/m^3$ to 5,000 $W/m^3$ or 1,000 $W/m^3$ to 3,000 $W/m^3$.

Lt is the overall inductance of a hybrid-type magnetic unit and an inductance measured in a state in which the first magnetic unit and the second magnetic unit are installed, Lt may be 25 to 60 $\mu$H. Lt may be 30 to 55 $\mu$H, 35 to 50 $\mu$H, 38 to 50 $\mu$H, 40 $\mu$H to 45 $\mu$H, 42 $\mu$H to 45 $\mu$H, or 42 $\mu$H to less than 44 $\mu$H.

La is the second inductance and an inductance measured in a state where only the second magnetic unit remains in the hybrid-type magnetic unit. For example, La may be measured as an inductance while the first magnetic unit is left as an empty space or replaced with a spacer unit. La may be 35 to 60 $\mu$H. La may be 35 to 55 $\mu$H, 40 to 50 $\mu$H, 40 to 48 $\mu$H, 38 to 43 $\mu$H, or 42 to 47 $\mu$H.

Lc is the inductance of the first magnetic unit and an inductance measured in a state where only the first magnetic unit remains in the hybrid-type magnetic unit. For example, Lc may be measured as an inductance while the second magnetic unit is left as an empty space or replaced with a spacer unit. Lc may be 35 to 55 $\mu$H. Lc may be 35 to

50 μH, 37 to 50 μH, 35 to 48 μH, 35 to 45 μH, or 37 to 44 μH.

The inductance is a conversion constant that converts current into magnetic flux. When magnetic flux is constant, inductance and current are in inverse proportion. In the present invention, the inductance was measured using an LCR Meter (IM3533, HIOKI Co.).

In Equation 2, Lt may be 25 to 60 μH, La may be 35 to 60 μH, and Lc may be 35 to 55 μH. According to an embodiment of the present invention, it is characterized in that the first inductance (Lc) and the second inductance (La) are different from each other. That is, La and Lc have different values from each other within the above ranges.

If Lt, La, and Lc satisfy the above ranges, and La and Lc have different values, the complex iron loss (Ci) of the magnetic unit targeted in the present invention can be satisfied; thus, charging efficiency and heat generation reduction characteristics can be enhanced. If Lt, La, and Lc are outside the above ranges or have the same value, heat may be generated, and charging efficiency may decrease.

Meanwhile, in Equation 2, a/La, which is iron loss (a) per measurement unit of the second magnetic unit for the second inductance (La), may be 1 $W/m^3$ to 8 $W/m^3$. a/La may be 2 $W/m^3$ to 6 $W/m^3$ or 2 $W/m^3$ to 5 $W/m^3$.

In Equation 2, c/Lc, which is iron loss (a) per measurement unit of the first magnetic unit for the first inductance (Lc), may be 20 $W/m^3$ to 100 $W/m^3$. c/Lc may be 20 $W/m^3$ to 80 $W/m^3$, 20 $W/m^3$ to 60 $W/m^3$, or 25 $W/m^3$ to 50 $W/m^3$.

If a/La or c/Lc is satisfied in Equation 2, charging efficiency and heat generation reduction characteristics can be enhanced.

Meanwhile, in the hybrid-type magnetic unit of the present invention, the types of the first magnetic unit and second magnetic unit are different, and their heat generation amounts may be different.

According to an embodiment of the present invention, the second magnetic unit having a larger amount of heat generated during wireless charging than that of the first magnetic unit among the magnetic units may be disposed closer to the shield unit.

For example, when a hybrid-type magnetic unit of two or more types having different heat generation amounts is adopted, the magnetic flux that is focused during wireless charging can be distributed in a desired direction. In particular, as the second magnetic unit having a larger amount of heat generated during wireless charging than that of the first magnetic unit among the magnetic units is disposed closer to the shield unit, it is possible to effectively distribute the magnetic flux density and heat dissipation, thereby increasing the wireless charging efficiency, and to dissipate the heat generated from the second magnetic unit through the shield unit, thereby effectively enhancing the heat dissipation characteristics.

Referring back to Figs. 1 and 2, the wireless charging device (10) of the present invention may comprise a structure (planar structure) in which a first magnetic unit (300) and a second magnetic unit (500) are sequentially stacked (Fig. 1), the first magnetic unit (300) has a three-dimensional structure, and the second magnetic unit (500) may be disposed only in a region corresponding to the coil unit (Fig. 2).

The wireless charging device (10) comprises a coil unit (200); and a magnetic unit disposed on the coil unit (200), wherein the magnetic unit comprises a first magnetic unit (300) disposed on the coil unit (200); and a second magnetic unit (500) disposed adjacent to the first magnetic unit (300). In such an event, the second magnetic unit (500) may be disposed on the first magnetic unit (300). In addition, the second magnetic unit (500) has a greater heat generation amount during wireless charging and may be disposed close to the shield unit (400).

In addition, the first magnetic unit (300) may comprise an outer part (310) corresponding to a part where the coil unit (200) is disposed; and a central part (320) surrounded by the outer part (310), wherein the outer part (310) may have a thickness greater than the thickness of the central part (320). In such an event, the outer part and the central part in the first magnetic unit may be integrally formed with each other. Alternatively, the outer part (310) and the central part (320) in the first magnetic unit may have the same thickness.

In addition, the thickness of a region corresponding to the coil unit (200) in the first magnetic unit (300) may be greater than the thickness of a region corresponding to the coil unit (200) in the second magnetic unit (500).

The total thickness of the first magnetic unit and the second magnetic unit may satisfy the ranges of T1 and T2 described above.

In addition, the thickness ratio of the first magnetic unit and the second magnetic unit may be 1:0.01 to 0.6, 1:0.03 to 0.5, or 1:0.05 to 0.4. In such an event, the thickness ratio is based on the outermost part corresponding to the coil unit.

The thermal conductivity of the second magnetic unit may be higher than that of the first magnetic unit by 0.1 W/m·K to 6 W/m·K, 0.5 W/m·K to 5 W/m·K, or 1 W/m·K to 4 W/m·K. As the second magnetic unit having a higher thermal conductivity than that of the first magnetic unit is disposed adjacent to the shield unit, it is possible to effectively disperse the heat generated during wireless charging through the distribution of magnetic flux and to enhance the durability against an external impact or distortion.

In addition, as the amounts (volumes) of the respective magnetic units adopted in view of the magnetic properties and physical properties of the two types of magnetic units are adjusted, it is possible to enhance the impact resistance and to reduce the manufacturing cost without impairing the charging efficiency. For example, the first magnetic unit may have a volume 2 to 9.5 times greater than that of the second magnetic unit.

For example, the volume ratio of the first magnetic unit and the second magnetic unit may be 1:0.01 to 0.6, 1:0.03 to 0.5, or 1:0.05 to 0.4.

The magnetic unit comprising the first magnetic unit and the second magnetic unit may form a magnetic path of a magnetic field formed around the coil unit and is disposed between the coil unit and the shield unit.

According to an embodiment of the present invention, referring back to Fig. 3, in the wireless charging device (10), the magnetic unit comprises a first magnetic unit (300) and a second magnetic unit (500) having a magnetic permeability higher than that of the first magnetic unit (300), the second magnetic unit (500) may be located at the center of the magnetic unit, and the entire surface or a circumferential surface of the second magnetic unit (500) may be surrounded by the first magnetic unit (300).

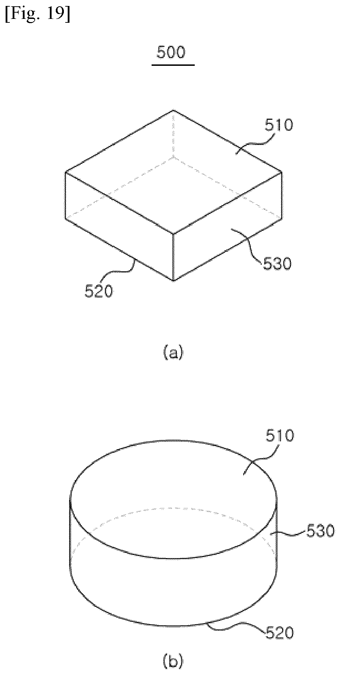

In such an event, referring to Fig. 19, the entire surface of the second magnetic unit (500) may refer to the entire surface comprising the upper surface (510), the lower surface (520), and the circumferential surface (530) of the second magnetic unit. In addition, the circumferential surface of the second magnetic unit (500) may refer to the part excluding the upper surface (510) and the lower surface (520) from the entire surface of the second magnetic unit, specifically, two pairs of the lateral surfaces opposing to each other (front, rear, left, and right) in Fig. 19(a) and the cylindrical surface in Fig. 19(b). Although the entire surface or circumferential surface of the second magnetic unit (500) has been described as an example of a hexahedral shape and a cylindrical shape, the shape of the second magnetic unit (500) may vary.

According to an embodiment of the present invention, as the second magnetic unit (500) having a higher magnetic permeability than that of the first magnetic unit (300) is disposed at the center of the magnetic unit, magnetic flux focused during wireless charging can be dispersed toward the center where the distribution of magnetic flux is relatively smaller. As a result, the heat generation temperature may be lowered during wireless charging, thereby further enhancing charging efficiency.

If only one of the first magnetic unit and the second magnetic unit is adopted, or if the arrangement of the first magnetic unit and the second magnetic unit deviates from the embodiment of the present invention, the magnetic unit in the wireless charging device generates a lot of heat in a part corresponding to the coil unit with a high electromagnetic wave energy density, and the generated heat changes the magnetic characteristics of the magnetic unit and causes an impedance mismatch between the transmitter and the receiver, which lowers the charging efficiency. As a result, heat generation intensifies, and deformation and damage of the structure of the device may take place.

According to an embodiment of the present invention, when the coil unit (200) receives wireless power from the outside, more heat may be generated in the second magnetic unit (500) than in the first magnetic unit (300). That is, the heat generation amount of the second magnetic unit (500) may be greater than that of the first magnetic unit (300).

Since the hybrid-type magnetic unit has different magnetic properties and amounts of heat generation as described above, the magnetic flux density that is focused during wireless charging can be distributed in a desired direction by taking advantage of the tendency in which the magnetic flux density increases in the order of the magnitude of magnetic permeability through a method of arranging and combining them. It is possible to effectively lower the heat generation temperature by taking advantage of the tendency in which the heat generation amount increases in proportion to the amount of magnetic flux and the size of the magnetic permeability loss, thereby enhancing charging efficiency.

Thus, as the second magnetic unit (500) having magnetic permeability and heat generation amount during wireless charging greater than those of the first magnetic unit (300) is disposed at the center of the magnetic unit according to an embodiment of the present invention, magnetic flux and heat generation may be effectively distributed, thereby lowering the heat generation temperature of the magnetic unit. As a result, wireless charging efficiency can be enhanced. In the wireless charging device according to an embodiment of the present invention, when the coil unit receives wireless power from the outside, the magnetic unit may have a temperature within a specific range or a tendency of temperature increase within a specific range, whereby it is possible to enhance the heat generation reduction effect.

Specifically, when the magnetic unit transmits wireless power having a frequency of 85 kHz and an output of 6.6 kW to the coil unit for 15 minutes, and the heat generation temperature of the lower surface of the magnetic unit is $T_{15}$, and when the wireless power is transmitted for 30 minutes, and the heat generation temperature of the lower surface of the magnetic unit is $T_{30}$, it may further increase from $T_{15}$ to $T_{30}$ by 30°C or less, for example, 28°C or less or 27°C or less.

If it is further increased from $T_{15}$ to $T_{30}$ by greater than 30°C, magnetic flux and heat generation are not uniformly distributed, whereby heat generation temperature rapidly rises, thereby decreasing charging efficiency. In particular, the heat generation temperature may be raised during high-speed charging and high-power wireless charging, which may cause safety problems such as damage to the wireless charging device and the possibility that the power conversion circuit is broken, resulting in limitation in the usability, or steeply reduce the charging efficiency.

$T_{15}$ may be 40°C to 65°C, for example, 45°C to 63°C, for example, 50°C to 62°C.

$T_{30}$ may be 50°C to 95°C, for example, 55°C to 92°C, for example, 60°C to 89°C.

If $T_{15}$ and $T_{30}$ each satisfy the above ranges, it is possible to maximize the charging efficiency and heat generation reduction characteristics.

On the other hand, if only one of the first magnetic unit and the second magnetic unit is adopted, or if the arrangement of the first magnetic unit and the second magnetic unit deviates from the embodiment of the present invention, the heat generation temperature may be further raised during high-speed charging and high-power wireless charging. In such a case, the safety problems such as damage to the wireless charging device and the possibility that the power conversion circuit is broken may cause a limitation in the usability or reduce the charging efficiency.

According to an embodiment of the present invention, the surface temperatures of the magnetic unit of the wireless charging device were measured under the SAE J2954 WPT2 Z2 class Standard TEST charging efficiency measurement conditions when the coil unit received wireless power having a frequency of 85 kHz and an output of 6.6 kW for 30 minutes. In the SAE J2954 WPT2 Z2 class Standard TEST, the Society of Automotive Engineers (SAE) J2954 standard is based on various contents such as the performance by capacity, interoperability, vertical and horizontal separation distance references for producing rated output, communication method between transceiver pads, operating frequency, electromagnetic interface (EMI)/electromagnetic compatibility (EMC), and stability of a wireless power transmission system. Since the above standard provides not only system performance but also specifications of transceiver pads for each capacity band, most automobile manufacturers comply with the configuration and size of transceiver pads suggested in the above standard when they manufacture transceiver pads.

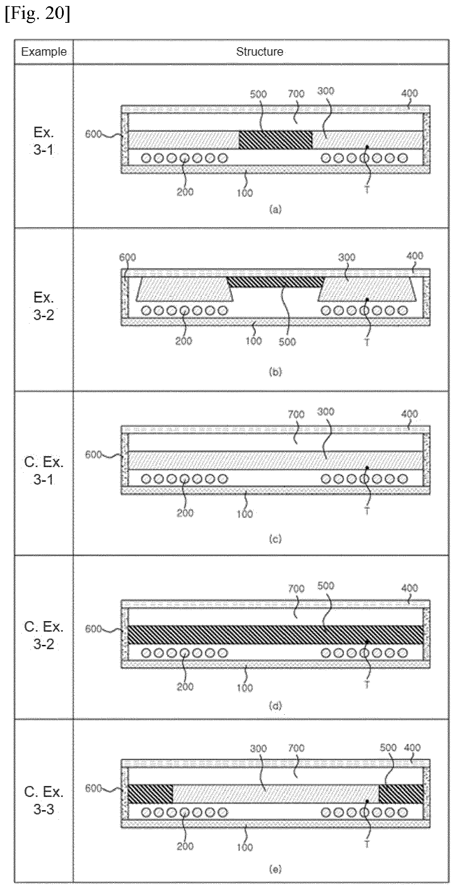

The surface temperature of the magnetic unit is measured for the lower surface of the magnetic unit using a T/GUARD 405-SYSTEM manufactured by Qualitrol. Specifically, the surface temperature of the magnetic unit is measured based on the center (maximum heat generation temperature, T) of the first magnetic unit corresponding to the coil unit (see Fig. 20).

In such an event, the thermal conductivity of the second magnetic unit may be higher than that of the first magnetic unit by 0.1 W/m·K to 6 W/m·K, 0.5 W/m·K to 5 W/m·K, or 1 W/m·K to 4 W/m·K. In such a case, as the second magnetic unit having a higher thermal conductivity than that of the first magnetic unit is disposed at the center of the magnetic unit, it is possible to effectively disperse the heat generated during wireless charging through the uniform distribution of magnetic flux and to enhance the durability against an external impact or distortion.

In addition, as the amounts (volumes) of the respective magnetic units adopted in view of the magnetic properties and physical properties of the two or more types of magnetic units are adjusted, it is possible to enhance the impact resistance and to reduce the manufacturing cost without impairing the charging efficiency. For example, the first magnetic unit may have a volume 2 to 9.5 times greater than that of the second magnetic unit.

Hereinafter, the first magnetic unit and the second magnetic unit will be described in detail.

## First magnetic unit

### Type of the first magnetic unit

The magnetic unit according to an embodiment of the present invention comprises a first magnetic unit, wherein the first magnetic unit may comprise a polymer-type magnetic block (PMB) comprising a binder resin and a magnetic powder dispersed in the binder resin. As the first magnetic unit comprises a polymer-type magnetic block, the magnetic powder is coupled with each other by the binder resin, it may have fewer defects over a large area and less damage caused by an impact, resulting in excellent impact resistance, along with an effect of weight reduction.

The magnetic powder may be an oxide-based magnetic powder, a metal-based magnetic powder, or a mixed powder thereof. For example, the oxide-based magnetic powder may be a ferrite-based powder, specifically, a Ni-Zn-based, Mg-Zn-based, or Mn-Zn-based ferrite powder. In addition, the metal-based magnetic powder may be a Fe-Si-Al alloy magnetic powder or a Ni-Fe alloy magnetic powder, more specifically, a sendust powder or a permalloy powder.

As an example, the magnetic powder may have a composition of the following Formula 1.

$$[\text{Formula 1}] \qquad \text{Fe}_{1-a-b-c}\,\text{Si}_a\,\text{X}_b\,\text{Y}_c$$

In the above formula, X is Al, Cr, Ni, Cu, or a combination thereof; Y is Mn, B, Co, Mo, or a combination thereof; $0.01 \leq a \leq 0.2$, $0.01 \leq b \leq 0.1$, and $0 \leq c \leq 0.05$.

In addition, the magnetic powder may be a nanocrystalline magnetic powder. For example, it may be a Fe-based nanocrystalline magnetic powder. Specifically, it may be a Fe-Si-Al-based nanocrystalline magnetic powder, a Fe-Si-Cr-based nanocrystalline magnetic powder, or a Fe-Si-B-Cu-Nb-based nanocrystalline magnetic powder.

The magnetic powder may have an average particle diameter in the range of about 3 nm to 1 mm, about 1 $\mu$m to 300 $\mu$m, about 1 $\mu$m to 50 $\mu$m, or about 1 $\mu$m to 10 $\mu$m.

The first magnetic unit may comprise the magnetic powder in an amount of 10% by weight or more, 50% by weight or more, 70% by weight or more, or 85% by weight or more.

For example, the first magnetic unit may comprise the magnetic powder in an amount of 10% by weight to 99% by weight, 10% by weight to 95% by weight, 50% by weight to 95% by weight, 50% by weight to 92% by weight, 70% by weight to 95% by weight, 80% by weight to 95% by weight, or 80% by weight to 90% by weight.

Examples of the binder resin include a polyimide resin, a polyamide resin, a polycarbonate resin, an acrylonitrile-butadiene-styrene (ABS) resin, a polypropylene resin, a polyethylene resin, a polystyrene resin, a polyphenylsulfide (PSS) resin, a polyether ether ketone (PEEK) resin, a silicone resin, an acrylic resin, a polyurethane resin, a polyester resin, an isocyanate resin, and an epoxy resin, but it is not limited thereto.

For example, the binder resin may be a curable resin. Specifically, the binder resin may be a photocurable resin and/or a thermosetting resin. In particular, it may be a resin capable of exhibiting adhesiveness upon curing. More specifically, the binder resin may be a resin comprising at least one functional group or moiety that can be cured by heat such as a glycidyl group, an isocyanate group, a hydroxyl group, a carboxyl group, or an amide group; or at least one functional group or moiety that can be cured by active energy such as an epoxide group, a cyclic ether group, a sulfide group, an acetal group, or a lactone group. Such a functional group or moiety may be, for example, an isocyanate group (-NCO), a hydroxyl group (-OH), or a carboxyl group (-COOH).

The first magnetic unit may comprise the binder resin in an amount of 5% by weight to 40% by weight, 5% by weight to 20% by weight, 5% by weight to 15% by weight, or 7% by weight to 15% by weight.

In addition, the first magnetic unit may comprise, based on the weight thereof, 6% by weight to 12% by weight of a polyurethane-based resin, 0.5% by weight to 2% by weight of an isocyanate-based curing agent, and 0.3% by weight to 1.5% by weight of an epoxy resin, as the binder resin.

**Structural characteristics of the first magnetic unit**

The first magnetic unit is disposed between the coil unit and the shield unit.

The first magnetic unit is disposed on the coil unit.

In addition, the first magnetic unit may be disposed to be spaced apart from the coil unit by a predetermined interval. For example, the spaced distance between the first magnetic unit and the coil unit may be 0.2 mm or more, 0.5 mm or more, 0.2 mm to 3 mm, or 0.5 mm to 2 mm.

In addition, the first magnetic unit may be disposed to be spaced apart from the shield unit by a predetermined interval. For example, the spaced distance between the first magnetic unit and the shield unit may be 3 mm or more, 5 mm or more, 3 mm to 10 mm, or 4 mm to 7 mm.

According to an embodiment of the present invention, the first magnetic unit may have a three-dimensional structure, in which case the charging efficiency and heat dissipation characteristics can be enhanced.

Referring to Figs. 2, 8, 9, and 11 to 13, the first magnetic unit (300) may comprise an outer part (310) corresponding to a part where the coil unit (200) is disposed; and a central part (320) surrounded by the outer part (310), wherein the outer part (310) may have a thickness greater than the thickness of the central part (320). In such an event, the outer part and the central part in the first magnetic unit may be integrally formed with each other.

As described above, as the thickness of the magnetic unit near the coil where electromagnetic energy is concentrated during wireless charging is increased and as the thickness of the central magnetic unit having a relatively low electromagnetic energy density since no coil is disposed there is decreased, it is possible not only to effectively focus electromagnetic waves concentrated around the coil, thereby enhancing the charging efficiency, but also to maintain the distance between the coil unit and the shield unit firmly without a separate spacer, whereby it is possible to reduce the material and process costs attributed to the use of a spacer and the like.

In the first magnetic unit, the outer part may have a thickness that is thicker than that of the central part by 1.5 times or more. Within the above thickness ratio, it is possible to more effectively focus a magnetic field concentrated around the coil to enhance the charging efficiency, and it is also advantageous in terms of heat generation and weight reduction. Specifically, in the first magnetic unit, the thickness ratio of the outer part to the central part may be 2 or more, 3 or more, or 5 or more. In addition, the thickness ratio may be 100 or less, 50 or less, 30 or less, or 10 or less. More specifically, the thickness ratio may be 1.5 to 100, 2 to 50, 3 to 30, or 5 to 10.

The thickness of the first magnetic unit, specifically, the thickness of the outer part of the first magnetic unit may be 1 mm or more, 2 mm or more, 3 mm or more, or 5 mm or more, and 30 mm or less, 20 mm or less, or 11 mm or less. In addition, the thickness of the central part of the first magnetic unit may be 10 mm or less, 7 mm or less, or 5 mm or less, and 0 mm, 0.1 mm or more, or 1 mm or more. Specifically, the outer part of the first magnetic unit may have a thickness of 2 mm to 12 mm, and the central part thereof may have a thickness of 0 mm to 5 mm. In addition, the outer part of the first magnetic unit may have a thickness of 5 mm to 11 mm, and the central part thereof may have a thickness of 0 mm to 5 mm.

When the thickness of the central part (320) of the first magnetic unit (300) is 0, the first magnetic unit (300) may have an empty shape in the central part (320) (e.g., a donut shape). In such a case, the first magnetic unit may effectively enhance the charging efficiency even with a smaller area.

In addition, according to an embodiment of the present invention, the first magnetic unit may have a planar structure (see Figs. 7 and 10) instead of a three-dimensional structure. That is, the outer part and the central part in the first magnetic unit may have the same thickness.

Meanwhile, the first magnetic unit may have a large area. Specifically, it may have an area of 200 cm$^2$ or more, 400 cm$^2$ or more, or 600 cm$^2$ or more. In addition, the first magnetic unit may have an area of 10,000 cm$^2$ or less.

The first magnetic unit having a large area may be configured by combining a plurality of magnetic units. In such an event, the area of the individual magnetic units may be 60 cm$^2$ or more, 90 cm$^2$, or 95 cm$^2$ to 900 cm$^2$.

Alternatively, the first magnetic unit may have an empty shape in the center. In such a case, the first magnetic unit may have an area of the outer part, that is, an area corresponding to the coil unit.

Meanwhile, the first magnetic unit may have a volume of 100 cm$^3$ to 1,500 cm$^3$. In addition, the volume of the first magnetic unit may be 200 cm$^3$ to 1,200 cm$^3$, 300 cm$^3$ to 1,100 cm$^3$, or 400 cm$^3$ to 1,100 cm$^3$.

Meanwhile, referring to Figs. 3 and 14, the first magnetic unit (300) may be disposed in a part (outer part) corresponding to a part where the coil unit (200) is disposed. That is, the first magnetic unit (300), which has a magnetic permeability relatively lower than that of the second magnetic unit (500), may be disposed in a part where the coil unit (200) is disposed in which electromagnetic energy is concentrated.

In addition, the first magnetic unit may comprise an outer part corresponding to a part where the coil unit is disposed; and a central part surrounded by the outer part, wherein the outer part may have a thickness greater than the thickness of the central part. In such an event, the outer part and the central part in the first magnetic unit may be integrally formed with each other.

In addition, referring to Fig. 15, the first magnetic unit (300) may comprise an outer part corresponding to a part where the coil unit (200) is disposed; and a central part surrounded by the outer part, wherein the middle (center) of the central part does not comprise the first magnetic unit (300) so that the second magnetic unit (500) may be inserted thereto, and the first magnetic unit (300) may be disposed to surround the entire surface of the second magnetic unit (500). Likewise, the outer part and the central part in the first magnetic unit (300) may be integrally formed with each other.

Meanwhile, since the first magnetic unit (300) may serve as a housing of the second magnetic unit (500), a separate adhesive or structure for fixing the second magnetic unit (500) may not be required. In particular, since the first magnetic unit (300) may be molded into a three-dimensional structure through a mold using a polymer-type magnetic unit using a magnetic powder and a binder resin, it may be molded such that the second magnetic unit (500) may be inserted thereto. In addition, the first magnetic unit (300) may easily form a groove through a mold for inserting the second magnetic unit (500).

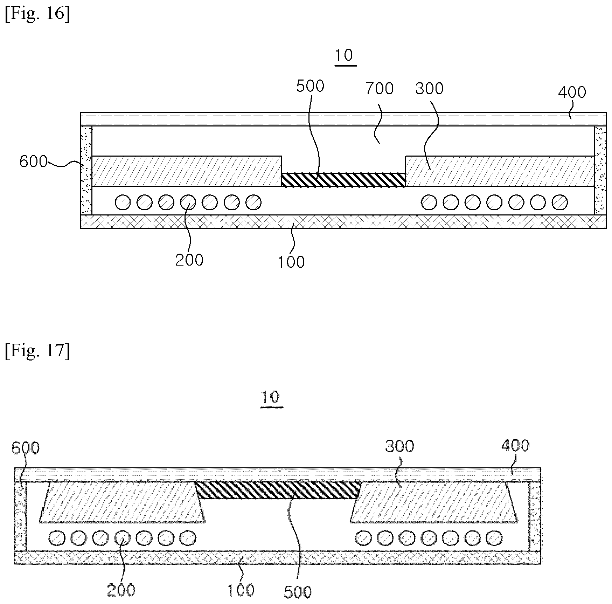

In addition, referring to Figs. 16 and 17, at least a part of the magnetic unit, that is, the first magnetic unit (300) and the second magnetic unit (500) may not be in contact with the shield unit (Fig. 16), or at least a part of the first magnetic unit (300) and the second magnetic unit (500) may be in contact with the shield unit (400) (Fig. 17). As a result, the heat generated in the first magnetic unit (300) and/or the second magnetic unit (500) may be effectively discharged through the shield unit (400).

The first magnetic unit may be a magnetic block prepared by a method such as molding through a mold. For example, the first magnetic unit may be one molded into a three-dimensional structure through a mold. Such a magnetic block may be obtained by mixing a magnetic powder and a binder resin and injecting it into a mold by injection molding to be molded to a three-dimensional structure.

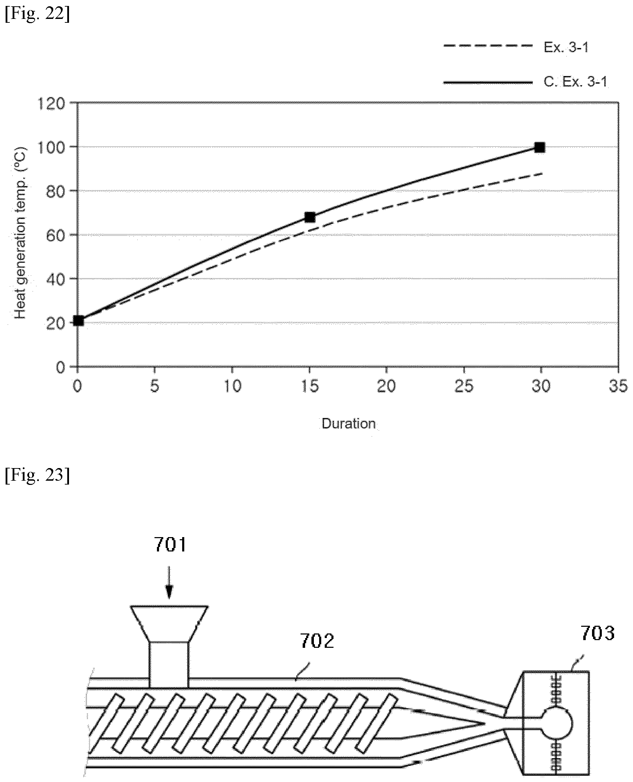

Specifically, the molding may be carried out by injecting the raw materials for the magnetic unit into a mold by injection molding. More specifically, the magnetic unit may be prepared by mixing a magnetic powder and a polymer resin composition to obtain a raw material composition, and then injecting the raw material composition (701) into a mold (703) by an injection molding machine (702) as shown in Fig. 23. In such an event, the internal shape of the mold (703) may be designed as a three-dimensional structure, so that the three-dimensional structure of the magnetic unit may be easily achieved. Such a process may be hardly carried out in which a conventional sintered ferrite sheet is used as a magnetic unit.

Alternatively, the first magnetic unit may be a laminate of magnetic sheets, for example, a laminate in which 20 or more or 50 or more magnetic sheets are laminated.

Specifically, in the magnetic sheet laminate, one or more magnetic sheets may be further laminated only on the central part of the first magnetic unit. In such an event, the magnetic sheets each may have a thickness of 80 μm or more or 85 μm to 150 μm. Such a magnetic sheet may be prepared by a conventional sheet-forming process such as mixing a magnetic powder and a binder resin to form a slurry, then molding it into a sheet shape, and curing it.

**Magnetic properties of the first magnetic unit**

The first magnetic unit may have magnetic characteristics of a certain level in the vicinity of a standard frequency for wireless charging of a transportation means, for example, an electric vehicle. In addition, the first magnetic unit may have a certain level of magnetic characteristics in the vicinity of a standard frequency for wireless charging in various fields of personal transportation such as electric motorcycles, electric kickboards, electric scooters, electric wheelchairs, and electric bicycles.

Specifically, the standard frequency for wireless charging of a transportation means, for example, an electric vehicle may be less than 100 kHz, for example, 79 kHz to 90 kHz, specifically, 81 kHz to 90 kHz, more specifically, about 85 kHz. It is a band distinct from the frequency applied to mobile electronic devices such as cell phones.

The magnetic permeability of the first magnetic unit at a frequency band of 85 kHz may vary depending on the material. It may be in the range of 5 to 150,000 and may specifically be in the range of 10 to 30,000, 10 to 1,000, greater than 1,000 to 8,000, greater than 8,000 to 30,000, or 50 to 200, depending on the specific material. In addition, the magnetic permeability loss of the first magnetic unit at a frequency band of 85 kHz may vary depending on the material. It may be in the range of 0 to 50,000 and may specifically be 0 to 1,000, 1 to 100, 100 to 1,000, or 5,000 to 50,000 depending on the specific material.

In addition, the magnetic permeability of the first magnetic unit at a frequency band of 85 kHz may be, for example, 5 to 500, for example, 5 to 400, for example, 5 to 300, for example, 5 to 200, for example, 5 to 130, for example, 10 to 300, for example, 50 to 200, for example, 50 to 130, 55 to 120, 15 to 80, or 10 to 50.

As a specific example, when the first magnetic unit is a polymer-type magnetic block comprising a magnetic powder and a binder resin, its magnetic permeability may be 5 to 500, 5 to 400, 50 to 200, 50 to 130, 55 to 120, 15 to 80, or 10 to 50, and its magnetic permeability loss may be 0 to 50, 0 to 20, 0 to 15, or 0 to 5, in the frequency band of 79 kHz to 90 kHz, for example, 85 kHz.

**Physical properties of the first magnetic unit**

The first magnetic unit may be elongated at a certain ratio. For example, the elongation of the first magnetic unit may be 0.5% or more. The elongation characteristic is difficult to obtain in a ceramic-based magnetic unit to which a polymer is not applied. It may reduce damage even if a large-area magnetic unit is distorted by an impact. Specifically, the elongation of the first magnetic unit may be 0.5% or more, 1% or more, or 2.5% or more. There is no particular limitation to the upper limit of the elongation. However, if the content of the polymer resin is increased to enhance the elongation, such characteristics as inductance of the magnetic unit may be deteriorated. Thus, the elongation is preferably 10% or less.

The first magnetic unit has a small rate of change in characteristics before and after an impact and is significantly superior to those of conventional ferrite magnetic sheets.

In the present specification, the rate of change (%) in certain characteristics before and after an impact may be calculated by the following equation.

Rate of change (%) in characteristic = | characteristic value before impact - characteristic value after impact | / characteristic value before impact $\times$ 100

For example, when the first magnetic unit is subjected to free-falling from a height of 1 m, it may have a rate of change in inductance of less than 5% or 3% or less before and after the impact. More specifically, the rate of change in inductance may be 0% to 3%, 0.001% to 2%, or 0.01% to 1.5%. Within the above range, since the rate of change in inductance before and after an impact is relatively small, the stability of the magnetic unit may be further enhanced.

In addition, when the first magnetic unit is subjected to free-falling from a height of 1 m, it may have a rate of change in quality factor (Q factor) of 0% to 5%, 0.001% to 4%, or 0.01% to 2.5%, before and after the impact. Within the above range, since the change in characteristics before and after an impact is small, the stability and impact resistance of the magnetic unit may be further enhanced.

In addition, when the first magnetic unit is subjected to free-falling from a height of 1 m, it may have a rate of change in resistance of 0% to 2.8%, 0.001% to 1.8%, or 0.1% to 1.0%, before and after the impact. Within the above range, even if it is repeatedly applied in an environment where an actual impact and vibration are applied, the resistance value can be well maintained below a certain level.

In addition, when the first magnetic unit is subjected to free-falling from a height of 1 m, it may have a rate of change in charging efficiency of 0% to 6.8%, 0.001% to 5.8%, or 0.01% to 3.4%, before and after the impact. Within the above range, even if a large-area magnetic unit is repeatedly subjected to an impact or distortion, its characteristics can be more stably maintained.

**Second magnetic unit**

**Type of the second magnetic unit**

The magnetic unit according to an embodiment of the present invention comprises a second magnetic unit.

The magnetic unit according to an embodiment of the present invention may comprise a second magnetic unit having a magnetic permeability different from that of the first magnetic unit.

The magnetic unit according to an embodiment of the present invention may comprise a second magnetic unit having a magnetic permeability higher than that of the first magnetic unit.

The second magnetic unit may comprise a ferrite-based magnetic material, a nanocrystalline magnetic material, or a combination thereof. The second magnetic unit may comprise a ferrite-based magnetic material, specifically, an oxide-based magnetic material, a metal-based magnetic material, or a composite material thereof.

As a material having a strong magnetic focusing force is used as the second magnetic unit according to an embodiment of the present invention, it is possible to compensate for the disadvantages of the first magnetic unit, which may cause a decrease in the charging efficiency due to a weak magnetic focusing force (inductance).

If the first magnetic unit alone is used without the second magnetic unit, it may produce the effect of impact resistance and a reduction in weight, whereas the magnetic focusing force (inductance) is weak, thereby deteriorating the charging efficiency. Meanwhile, although the second magnetic unit has a strong magnetic focusing force, it may be hardly processed to a large flat plate, and there may be limitations in manufacturing and processing it in the form of a thick layer for a transportation means. Thus, as the second magnetic unit having a strong magnetic focusing force is adopted together with the first magnetic unit having high impact resistance and a weight reduction effect, the performance of the wireless charging device can be efficiently enhanced.

The oxide-based magnetic material may be a ferrite-based material. A specific chemical formula thereof may be represented by $MOFe_2O_3$ (wherein M is one or more divalent metal elements such as Mn, Zn, Cu, and Ni). The ferrite-based material is preferably a sintered material from the viewpoint of such magnetic characteristics as magnetic permeability. The ferrite-based material may be prepared in the form of a sheet or a block by mixing raw materials followed by calcining, pulverizing, mixing with a binder resin, molding, and sintering.

More specifically, the oxide-based magnetic material may be a Ni-Zn-based, Mg-Zn-based, or Mn-Zn-based ferrite. In particular, Mn-Zn-based ferrite may exhibit high magnetic permeability, low magnetic permeability loss, and high saturation magnetic flux density over a temperature range of room temperature to 100°C or higher at a frequency of 85 kHz.

The Mn-Zn-based ferrite comprises 66% by mole to 70% by mole of iron oxide $Fe_2O_3$, 10% by mole to 20% by mole of ZnO, 8% by mole to 24% by mole of MnO, and 0.4% by mole to 2% by mole of NiO as main components and may further comprise $SiO_2$, CaO, $Nb_2O_5$, $ZrO_2$, SnO, and the like as additional subcomponents. The Mn-Zn-based ferrite may be prepared in the form of a sheet or a block by mixing the main components at a predetermined molar ratio, calcining them in the air at a temperature of 800°C to 1,100°C for 1 hour to 3 hours, adding the subcomponents thereto and pulverizing them, mixing them with a binder resin such as polyvinyl alcohol (PVA) in an appropriate amount, press-molding them using a press, and sintering them by raising the temperature to 1,200°C to 1,300°C for 2 hours or longer. Thereafter, it is processed using a wire saw or a water jet and cut to a required size, if necessary.

In addition, the metal-based magnetic material may be a Fe-Si-Al alloy magnetic material or a Ni-Fe alloy magnetic material, more specifically, a sendust or a permalloy.

In addition, the second magnetic unit may comprise a nanocrystalline magnetic material. For example, it may be a Fe-based nanocrystalline magnetic material. Specifically, it may comprise a Fe-Si-Al-based nanocrystalline magnetic material, a Fe-Si-Cr-based nanocrystalline magnetic material, or a Fe-Si-B-Cu-Nb-based nanocrystalline magnetic material. If the nanocrystalline magnetic material is applied as the second magnetic unit, the longer the distance from the coil unit, the lower the resistance (Rs) even if the inductance (Ls) of the coil is lowered. Thus, the quality factor (Q factor: Ls/Rs) of the coil unit is increased, which may enhance the charging efficiency and reduce the generation of heat.

The nanocrystalline magnetic material is prepared by, for example, a rapid solidification process (RSP) by melt-spinning a Fe-based alloy. It may be prepared by performing a zero-field thermal treatment for 30 minutes to 2 hours in a temperature range of 300°C to 700°C.

If the thermal treatment temperature is lower than 300°C, nanocrystals are not sufficiently formed, so that the desired magnetic permeability is not obtained, which requires a longer thermal treatment time. If it exceeds 700°C, the magnetic permeability may be significantly lowered by excessive thermal treatment. In addition, when the thermal treatment temperature is low, the treatment time is long. On the other hand, when the thermal treatment temperature is high, the treatment time is preferably shortened.

In addition, the nanocrystalline magnetic material may be crushed by a pressure roll or the like at the end of the manufacturing process to form a plurality of cracks in the thin sheet, whereby it may be manufactured to comprise a plurality of nanocrystalline fine pieces.

The second magnetic unit may be formed of a magnetic material different from that of the first magnetic unit. As a specific example, the first magnetic unit may comprise a polymer-type magnetic unit (e.g., a polymer-type magnetic block (PMB)) comprising a magnetic powder and a binder resin, and the second magnetic unit may comprise a ferrite-based magnetic material, a nanocrystalline magnetic material, or a combination thereof. For example, the first magnetic unit may comprise a Fe-Si-Al-based alloy magnetic material, and the second magnetic unit may comprise one or more selected from the group consisting of Mn-Zn-based ferrite, a Fe-Si-Al-based nanocrystalline magnetic powder, a Fe-Si-Cr-based nanocrystalline magnetic powder, and a Fe-Si-B-Cu-Nb-based nanocrystalline magnetic powder. The combination of the first magnetic unit and the second magnetic unit is advantageous in that the second magnetic unit has a magnetic permeability higher than that of the first magnetic unit at 79 kHz to 90 kHz, specifically, at 85 kHz.

**Structural characteristics of the second magnetic unit**

The second magnetic unit may have a sheet shape or a block shape.

The second magnetic unit may have the same thickness as that of the first magnetic unit. In addition, the second magnetic unit may have a thickness different from that of the first magnetic unit.

In addition, the thickness of the second magnetic unit may be 0.04 mm or more, 0.05 mm or more, 0.1 mm or more, 0.2 mm or more, 0.5 mm or more, 1 mm or more, 3 mm or more, or 5 mm or more, and 30 mm or less, 20 mm or less, or 11 mm or less. In addition, the second magnetic unit may have a thickness of 10 mm or less, 7 mm or less, or 5 mm or less.

Specifically, the thickness of the second magnetic unit may be 0.04 mm to 5 mm, 0.1 mm to 5 mm, 0.5 mm to 5 mm, 0.5 mm to 3 mm, 0.5 mm to 2 mm, or 1 mm to 2 mm.

In addition, the volume of the second magnetic unit may be 1 $cm^3$ to 900 $cm^3$, 6 $cm^3$ to 550 $cm^3$, or 12 $cm^3$ to 440 $cm^3$.

The second magnetic unit may have the same area as, a different area from, that of the first magnetic unit.

The second magnetic unit may have an area of 50 $cm^2$ or more, 70 $cm^2$ or more, or 100 $cm^2$ or more. In addition, the second magnetic unit may have an area of 4,000 $cm^2$ or less.

For example, the second magnetic unit may have the same large area as that of the first magnetic unit. Specifically, the second magnetic unit may have an area of 200 $cm^2$ or more, 400 $cm^2$ or more, or 600 $cm^2$ or more. In addition, the second magnetic unit may have an area of 10,000 $cm^2$ or less.

Alternatively, the second magnetic unit may have a smaller area than that of the first magnetic unit. For example, if the second magnetic unit is disposed only on the outer part of the first magnetic unit, the second magnetic unit may have an area corresponding to the area of the outer part. In addition, as a result, the second magnetic unit may be disposed at a position corresponding to the coil unit and may have an area corresponding to the area of the coil unit. In such a case, the second magnetic unit may effectively enhance the charging efficiency and heat dissipation characteristics even with a smaller area.

Meanwhile, the maximum cross-sectional area of the second magnetic unit in a horizontal direction may be 10% to 40% of the total cross-sectional area of the magnetic unit. The maximum cross-sectional area of the second magnetic unit in a horizontal direction may be, for example, 10% to 38%, for example, 10% to 35%, for example, 10% to 34%, for example, 10% to 33%, for example, 10% to 31%, for example, 10% to 30%, for example, 10% to 25%, or, for example, 10% to 20% of the total cross-sectional area of the magnetic unit.

**Magnetic properties of the second magnetic unit**

The second magnetic unit may have magnetic characteristics of a specific level in the vicinity of a standard frequency for wireless charging of a transportation means, for example, an electric vehicle. In addition, the second magnetic unit may have a certain level of magnetic characteristics in the vicinity of a standard frequency for wireless charging in various fields of personal transportation such as electric motorcycles, electric kickboards, electric scooters, electric wheelchairs, and electric bicycles.

For example, the magnetic permeability (P2) of the second magnetic unit at a frequency band of 85 kHz may vary depending on the material and may have a magnetic permeability of 10 to 150,000 or greater than 500 to 150,000.

The magnetic permeability (P2) of the second magnetic unit may be 10 to 30,000, 10 to 1,000, greater than 1,000 to 8,000, or greater than 8,000 to 30,000.

The magnetic permeability (P2) of the second magnetic unit may be greater than the magnetic permeability (P1) of the first magnetic unit.

The magnetic permeability of the second magnetic unit may be 500 to 20,000, 1,000 to 20,000, 500 to 3,500, 1,000 to 5,000, greater than 5,000 to 20,000, greater than 10,000 to 100,000, or 8,000 to 150,000, depending on the specific material.

In addition, the magnetic permeability loss of the second magnetic unit at a frequency band of 85 kHz may vary depending on the material. It may be 0 to 50,000 and may specifically be 0 to 1,000, 1 to 100, 100 to 1,000, or 5,000 to 50,000 depending on the specific material.

As a specific example, the second magnetic unit may have a magnetic permeability of 1,000 to 20,000 and a magnetic permeability loss of 0 to 500 at 85 kHz.

As another example, if the second magnetic unit is a ferrite-based material, it may have a magnetic permeability of 1,000 to 5,000, greater than 1,000 to less than 5,000, 2,000 to 5,000, or 2,000 to 4,000, and a magnetic permeability loss of 0 to 1,000, 0 to 500, 0 to 100, or 0 to 50, at a frequency band of 85 kHz.

As another example, if the second magnetic unit is a nanocrystalline magnetic material, it may have a magnetic permeability of 5,000 or more, greater than 5,000 to 180,000, greater than 5,000 to 180,000, 12,000 to 18,000, 13,000 to 17,000, 14,000 to 16,000, at a frequency band of 85 kHz. In addition, its magnetic permeability loss may be 100 to 50,000 or 1,000 to 10,000.

According to the embodiment, the second magnetic unit has a magnetic permeability at a frequency of 85 kHz higher than that of the first magnetic unit. For example, the difference in magnetic permeability at a frequency of 85 kHz between the second magnetic unit and the first magnetic unit may be 100 or more, 500 or more, or 1,000 or more, specifically, 100 to 10,000, 100 to 5,000, 500 to 4,500, or 1,000 to 4,500.

Specifically, the first magnetic unit may have a magnetic permeability of 5 to 500 or 5 to 300 at a frequency of 85 kHz, and the second magnetic unit may have a magnetic permeability of greater than 500 to 150,000, 1,000 to 20,000, 1,000 to 10,000, or greater than 5,000 to 20,000 at a frequency of 85 kHz.

In addition, the first magnetic unit may have a magnetic permeability loss of 0 to 50 at 85 kHz, and the second magnetic unit may have a magnetic permeability loss of 0 to 500 at 85 kHz.

Although the magnetic flux density during wireless charging is higher as it is closer to the coil unit, if the magnetic unit is around the coil unit, the magnetic flux is focused on the magnetic unit. If one or more magnetic units are adopted, the magnetic flux density increases in the order of the magnitude of magnetic permeabilities of the magnetic units. Thus, if the second magnetic unit having a magnetic permeability higher than that of the first magnetic unit is properly arranged, the magnetic flux can be effectively distributed.

**Arrangement of the second magnetic unit**

As shown in Figs. 7 to 17, the second magnetic unit (500) may be disposed adjacent to the first magnetic unit (300).

According to an embodiment of the present invention, as the second magnetic unit having a higher magnetic permeability at 85 kHz than that of the first magnetic unit in the hybrid-type magnetic unit is disposed adjacent to the first magnetic unit disposed on the coil unit, it is possible to control the composite magnetic permeability (CP) of the hybrid-type magnetic unit. If the hybrid-type magnetic unit has a specific composite magnetic permeability, charging efficiency and heat dissipation characteristics may be maximized.

As shown in Figs. 7 to 13, the second magnetic unit (500) may be disposed between the shield unit (400) and the first magnetic unit (300).

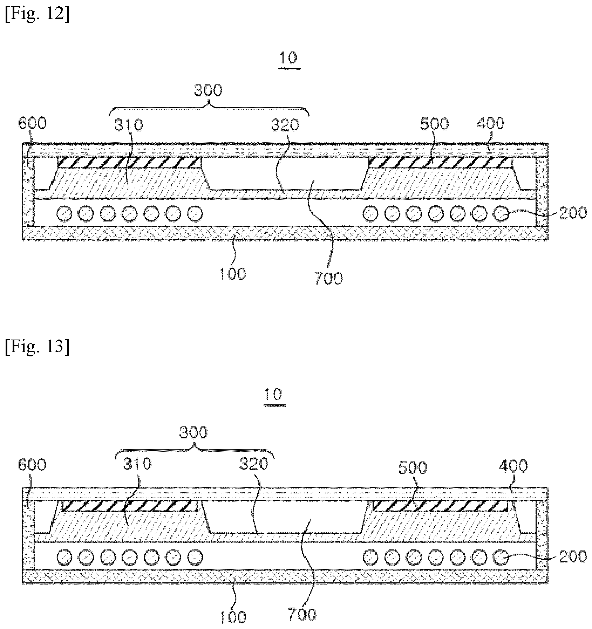

In addition, as shown in Figs. 12 and 13, the second magnetic unit (500) is disposed between the shield unit (400) and the first magnetic unit (300), and the second magnetic unit (500) may be thermally connected to, and electrically insulated from, the shield unit (400).

In addition, the second magnetic unit (500) may have a higher permeability at 85 kHz than that of the first magnetic unit (300) and may be disposed close to the shield unit (400).

As the second magnetic unit having a higher magnetic permeability than that of the first magnetic unit is disposed close to the shield unit, the high magnetic flux density around the coil unit can be effectively dispersed, whereby it is possible to not only increase the charging efficiency but also effectively dissipate the heat generation concentrated in the vicinity of the coil unit of the first magnetic unit as compared with the case in which the first magnetic unit alone is adopted.

In addition, at least a portion of the second magnetic unit may be in contact with the shield unit. As a result, the heat generated in the second magnetic unit may be effectively discharged through the shield unit. For example, when the second magnetic unit is in the form of a sheet, one side thereof in its entirety may be in contact with the shield unit. The second magnetic unit may be attached to one side of the shield unit with a thermally conductive adhesive, thereby further enhancing the heat dissipation effect. The thermally conductive adhesive may comprise a thermally conductive material such as a metal-based, carbon-based, or ceramic-based adhesive, for example, an adhesive resin in which thermally conductive particles are dispersed.

In addition, as shown in Fig. 7, the second magnetic unit (500) may be disposed in both the outer part corresponding to the coil unit (200) and the central part (320) surrounded by the outer part.

In addition, as shown in Figs. 8 to 10, the second magnetic unit (500) may be disposed only on the outer part (310) corresponding to the coil unit (200). As a result, a high magnetic flux density around the coil unit (200) can be effectively dispersed, whereby it is possible to increase the charging efficiency as compared with the case in which the first magnetic unit alone is adopted.

Alternatively, the second magnetic unit may be disposed over at least a portion of the outer part and the central part.

The second magnetic unit may be disposed to be coupled to, or separated from, the first magnetic unit.

Meanwhile, the second magnetic unit may be in contact with the first magnetic unit as well. For example, referring to Figs. 8 to 10, the second magnetic unit (500) may be attached to the outer part of the first magnetic unit (300).

Alternatively, the second magnetic unit may be disposed to be spaced apart from the first magnetic unit by a predetermined distance. For example, the spaced distance between the first magnetic unit and the second magnetic unit may be 1 mm or more, 2 mm or more, 1 mm to 10 mm, 2 mm to 7 mm, 3 mm to 5 mm, or 5 mm to 10 mm.

In addition, referring back to Fig. 9, a groove may be provided on the surface of the first magnetic unit (300) facing the shield unit (400), and the second magnetic unit (500) may be inserted into the groove.

In such a case, since the first magnetic unit may serve as a housing of the second magnetic unit, a separate adhesive or structure for fixing the second magnetic unit may not be required. In particular, since the first magnetic unit may be molded into a three-dimensional structure through a mold using a polymer-type magnetic unit using a magnetic powder and a binder resin, a groove for inserting the second magnetic unit may be easily formed.

In such a case, at least a portion of the first magnetic unit and the second magnetic unit may be in contact with the shield unit. As a result, the heat generated in the first magnetic unit and/or the second magnetic unit may be effectively discharged through the shield unit.

The depth of the groove formed in the first magnetic unit may be the same as, or different from, the thickness (height) of the second magnetic unit. If the depth of the groove and the thickness of the second magnetic unit are the same, the first magnetic unit and the second magnetic unit may be in contact with the shield unit at the same time. Alternatively, if the depth of the groove is smaller than the thickness of the second magnetic unit, only the second magnetic unit may be in contact with the shield unit. On the other hand, if the depth of the groove is larger than the thickness of the second magnetic unit, only the first magnetic unit may be in contact with the shield unit.

In addition, referring to Figs. 7 to 10, the second magnetic unit (500) may be disposed to be spaced apart from the shield unit (400) by a predetermined distance.

Meanwhile, the second magnetic unit may be located at the center of the magnetic unit.

As the second magnetic unit having a higher magnetic permeability than that of the first magnetic unit is disposed at the center of the magnetic unit, magnetic flux focused during wireless charging can be dispersed toward the center where the distribution of magnetic flux is relatively smaller. As a result, the magnetic flux density of a part corresponding to the coil unit is lowered, and the magnetic flux density at the center without the coil unit is heightened, which evenly distributes magnetic flux and heat generation, whereby it is possible to efficiently enhance heat generation reduction characteristics and wireless charging efficiency during wireless charging.

The entire surface or a circumferential surface of the second magnetic unit may be surrounded by the first magnetic unit.

Specifically, referring back to Figs. 14, 16, and 17, the circumferential surface of the second magnetic unit (500) may be surrounded by the first magnetic unit (300).

In addition, referring back to Fig. 15, the entire surface of the second magnetic unit (500) may be surrounded by the first magnetic unit (300).

**Coil unit**

The wireless charging device according to an embodiment of the present invention comprises a coil unit through which an alternating current flows to generate a magnetic field.

The coil unit may comprise a conductive wire.

The conductive wire comprises a conductive material. For example, the conductive wire may comprise a conductive metal. Specifically, the conductive wire may comprise at least one metal selected from the group consisting of copper, nickel, gold, silver, zinc, and tin.

In addition, the conductive wire may have an insulating sheath. For example, the insulating sheath may comprise an insulating polymer resin. Specifically, the insulating sheath may comprise a polyvinyl chloride (PVC) resin, a polyethylene (PE) resin, a Teflon resin, a silicone resin, a polyurethane resin, or the like.

The conductive wire may have a diameter of, for example, 1 mm to 10 mm, 2 mm to 7 mm, 1 mm to 5 mm, 3 mm to 5 mm, or 1 mm to 3 mm.

The conductive wire may be wound in the form of a planar coil. Specifically, the planar coil may comprise a planar spiral coil. In addition, the planar shape of the coil may be an ellipse, a polygon, or a polygonal shape with rounded corners, but it is not particularly limited thereto.

The planar coil may have an outer diameter of 5 cm to 100 cm, 10 cm to 50 cm, 10 cm to 30 cm, 20 cm to 80 cm, or 50 cm to 100 cm. As a specific example, the planar coil may have an outer diameter of 10 cm to 50 cm.

In addition, the planar coil may have an inner diameter of 0.5 cm to 30 cm, 1 cm to 20 cm, or 2 cm to 15 cm.

The number of turns of the planar coil wound may be 1 to 50 times, 5 to 50 times, 10 to 30 times, 5 to 30 times, 15 to 50 times, 20 to 50 times, 5 to 20 times, or 7 to 15 times. As a specific example, the planar coil may be formed by winding the conductive wire 10 to 30 times or 7 to 15 times.

In addition, the distance between the conductive wires in the planar coil shape may be 0.1 cm to 1 cm, 0.1 cm to 0.5 cm, or 0.5 cm to 1 cm.

The coil unit may be disposed to be spaced apart from the magnetic unit by a predetermined interval. For example, the spaced distance between the coil unit and the magnetic unit may be 0.2 mm or more, 0.5 mm or more, 0.2 mm to 3 mm, or 0.5 mm to 1.5 mm.

Within the preferred plane coil dimensions and specification ranges as described above, it can be appropriately used in the fields such as electric vehicles that require large-capacity power transmission, as well as various personal transportation means such as electric motorcycles, electric kickboards, electric scooters, electric wheelchairs, electric bicycles, and the like.

**Shield unit**

The wireless charging device (10) according to an embodiment may further comprise a shield unit (400) that serves to increase the wireless charging efficiency through the shielding of electromagnetic waves.

The shield unit is disposed on one side of the coil.

The shield unit comprises a metal plate. The material thereof may be aluminum, and other metal or alloy materials having a shielding capability of electromagnetic waves may be used.

The shield unit may have a thickness of 0.2 mm to 10 mm, 0.5 mm to 5 mm, or 1 mm to 3 mm.

In addition, the shield unit may have an area of 200 cm$^2$ or more, 400 cm$^2$ or more, or 600 cm$^2$ or more.

**Spacer unit**

The wireless charging device according to an embodiment may further comprise a spacer unit (700), a spacer insert part (750), or both for securing a space between the shield unit (400) and the magnetic unit (300, 500).

Specifically, referring back to Figs. 7 to 10, the magnetic unit, specifically, the first magnetic unit (300) and/or the second magnetic unit (500) may be disposed at a predetermined distance from the shield unit (400). In addition, it may further comprise an empty space or a spacer unit (700) between the first magnetic unit (300) and/or the second magnetic unit (500) and the shield unit (400). In addition, the spacer unit (700) may be an empty space.

In addition, referring to Fig. 11, the second magnetic unit (500) is disposed at a predetermined distance from the shield unit (400), and a spacer insert part (750) that employs the material and structure of a typical housing used in a wireless charging device may be disposed in at least part of the spacer unit.

**Housing**

The wireless charging device (10) according to an embodiment may further comprise a housing (600) for accommodating the coil unit (200), the first magnetic unit (300), and the second magnetic unit (500).

In addition, the housing (600) allows such components as the coil unit (200), the shield unit (400), the first magnetic unit (300), and the second magnetic unit (500) to be properly disposed and assembled. The shape (structure) of the housing may be arbitrarily determined according to the components accommodated therein or according to the environment. The material and structure of the housing may be a material and structure of a conventional housing used in a wireless charging device.

**Support unit**

The wireless charging device (10) according to an embodiment may further comprise a support unit (100) for supporting the coil unit (200). The material and structure of the support unit may be a material and structure of a conventional support unit used in a wireless charging device. The support unit may have a flat plate structure or a structure in which a groove is formed in compliance with a coil shape to fix the coil unit.

Meanwhile, when the wireless charging device of the present invention is wirelessly charged at a high power of 3kW to 22kW, 4kW to 20kW, or 5kW to 18kW, it is possible to effectively reduce the heat generated while the coil unit receives wireless power from the outside and to enhance charging efficiency. Thus, it can be advantageously used for high-power wireless charging.

In particular, as a three-dimensional structure is applied to the magnetic unit of the wireless charging device, the charging efficiency and characteristics of reducing heat generation can be further enhanced.

The wireless charging device according to an embodiment of the present invention may have a charging efficiency of 85% or more, 88% or more, 89% or more, 90% or more, or 91% or more.

**[Transportation means]**

The present invention provides a transportation means, which comprises the wireless charging device.

Accordingly, the transportation means may comprise electric vehicles that require large-capacity power transmission between a transmitter and a receiver, as well as various personal transportation means such as electric motorcycles, electric kickboards, electric scooters, electric wheelchairs, electric bicycles, and the like.

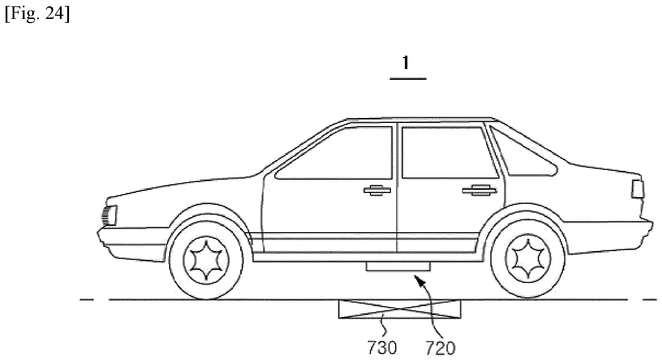

Fig. 24 shows an electric vehicle, specifically, an electric vehicle provided with a wireless charging device. Since it is provided with a wireless charging device on its lower side, it may be charged wirelessly in a parking area equipped with a wireless charging system for an electric vehicle.

Referring to Fig. 24, the electric vehicle (1) according to an embodiment comprises the wireless charging device according to an embodiment as a receiver (720).

The wireless charging device may serve as a receiver for wireless charging of the electric vehicle (1) and may receive power from a transmitter (730) of a wireless charging.

According to an embodiment of the present invention, the transportation means comprises a coil unit; and a magnetic unit disposed on the coil unit, and the magnetic unit comprises a first magnetic unit disposed on the coil unit; and a second magnetic unit disposed adjacent to the first magnetic unit and having a magnetic permeability different from that of the first magnetic unit.

According to another embodiment of the present invention, the transportation means comprises a wireless charging device, wherein the wireless charging device comprises a coil unit; and a magnetic unit disposed on the coil unit, the magnetic unit comprises a first magnetic unit disposed on the coil unit; and a second magnetic unit disposed adjacent to the first magnetic unit, and a second inductance in a state where only the second magnetic unit remains and a first inductance in a state where only the first magnetic unit remains are different from each other.

According to still another embodiment of the present invention, the transportation means comprises a wireless charging device, wherein the wireless charging device comprises a coil unit; and a magnetic unit disposed on the coil unit, the magnetic unit comprises a first magnetic unit and a second magnetic unit, the second magnetic unit is located at the center of the magnetic unit, the entire surface or a circumferential surface of the second magnetic unit is surrounded by the first magnetic unit, and the magnetic permeability of the second magnetic unit is higher than the magnetic permeability of the first magnetic unit.

The configuration and characteristics of each component of the wireless charging device adopted in the transportation means are as described above.

The transportation means may further comprise a battery for receiving power from the wireless charging device. The wireless charging device may receive power wirelessly and transmit it to the battery, and the battery may supply power to a driving system of the electric vehicle. The battery may be charged by power transmitted from the wireless charging device or other additional wired charging devices.

In addition, the transportation means may further comprise a signal transmitter for transmitting information about the charging to the transmitter of the wireless charging system. The information about such charging may be charging efficiency such as charging speed, charging state, and the like.

Hereinafter, specific embodiments of the present invention will be described. However, the embodiments described below are intended only to illustrate or explain the present invention. The present invention should not be limited thereto.

**Mode for the Invention**

**Example**

**Example 1-1: Preparation of a hybrid-type magnetic unit**

**Step 1: Preparation of a first magnetic unit (PMB magnetic unit)**

42.8 parts by weight of a magnetic powder, 15.4 parts by weight of a polyurethane-based resin dispersion (25% by weight of a polyurethane-based resin and 75% by weight of 2-butanone), 1.0 part by weight of an isocyanate-based curing agent dispersion (62% by weight of an isocyanate-based curing agent, 25% by weight of n-butyl acetate, and 13% by weight of 2-butanone), 0.4 part by weight of an epoxy-based resin dispersion (70% by weight of an epoxy-based resin, 3% by weight of n-butyl acetate, 15% by weight of 2-butanone, and 12% by weight of toluene), and 40.5 parts by weight of toluene were mixed in a planetary mixer at a speed of about 40 to 50 rpm for about 2 hours to prepare a magnetic powder slurry.

The magnetic powder slurry prepared above was coated onto a carrier film by a comma coater, which was dried at a temperature of about 110°C to form a dried magnetic composite. The dried magnetic composite was compression-hardened by a hot press process for about 60 minutes at a temperature of about 170°C and a pressure of about 9 MPa to obtain a sheet-type magnetic composite. The content of magnetic powder in the magnetic composite thus prepared was about 90% by weight, and the thickness of a single sheet was about 100 μm. 40 to 50 of the sheets were laminated to obtain a first magnetic unit having a thickness of about 10.4 mm.

**Step 2: Preparation of a hybrid-type magnetic unit**

A nanocrystalline magnetic material (manufactured by Hitachi, 0.1 mm in thickness) as a second magnetic unit was placed on one side of the first magnetic unit (10.4 mm in thickness) prepared in Example 1-1, which was then fixed by thermal compression to obtain a hybrid-type magnetic unit (10.5 mm in thickness).

**Step 3: Manufacture of a wireless charging device**

The hybrid-type magnetic unit of step 2 was used to obtain a wireless charging device comprising a coil unit comprising a conductive wire, the hybrid-type magnetic unit, and a shield unit, as shown in Fig. 7. Here, the second magnetic unit was disposed to face the shield unit.

**Example 1-2**

A hybrid-type magnetic unit and a wireless charging device comprising the same were obtained in the same manner as in Example 1-1, except that the thickness of the first magnetic unit and the thickness of the second magnetic unit were adjusted to 10 mm and 0.5 mm, respectively, as shown in Table 1 below.

**Example 1-3**

A hybrid-type magnetic unit and a wireless charging device comprising the same were obtained in the same manner as in Example 1-1, except that the thickness of the first magnetic unit and the thickness of the second magnetic unit were adjusted to 9.5 mm and 1 mm, respectively, as shown in Table 1 below.

**Example 1-4**

A hybrid-type magnetic unit and a wireless charging device comprising the same were obtained in the same manner as in Example 1-1, except that the thickness of the first magnetic unit was adjusted to 9.5 mm and that a ferrite-based magnetic material (PC-95 ferrite-based magnetic material manufactured by TDK Corporation) having a thickness of 1 mm was placed on one side of the first magnetic unit, as shown in Table 1 below.

**Example 1-5**

A hybrid-type magnetic unit and a wireless charging device comprising the same were obtained in the same manner as in Example 1-4, except that the thickness of the first magnetic unit and the thickness of the second magnetic unit were adjusted to 7.5 mm and 3 mm, respectively, as shown in Table 1 below.

**Example 1-6**

A hybrid-type magnetic unit and a wireless charging device comprising the same were obtained in the same manner as in Example 1-1, except that the thickness of the first magnetic unit and the thickness of the second magnetic unit were adjusted to 4.9 mm and 0.1 mm, respectively, as shown in Table 1 below.

**Example 1-7**

A hybrid-type magnetic unit and a wireless charging device comprising the same were obtained in the same manner as in Example 1-1, except that the thickness of the first magnetic unit and the thickness of the second magnetic unit were adjusted to 4.5 mm and 0.5 mm, respectively, as shown in Table 1 below.

**Example 1-8**

A hybrid-type magnetic unit and a wireless charging device comprising the same were obtained in the same manner as in Example 1-1, except that the thickness of the first magnetic unit and the thickness of the second magnetic unit were adjusted to 4 mm and 1 mm, respectively, as shown in Table 1 below.

**Example 1-9**

A hybrid-type magnetic unit and a wireless charging device comprising the same were obtained in the same manner as in Example 1-4, except that the thickness of the first magnetic unit and the thickness of the second magnetic unit were adjusted to 4 mm and 1 mm, respectively, as shown in Table 1 below.

**Example 1-10**

A hybrid-type magnetic unit and a wireless charging device comprising the same were obtained in the same manner as in Example 1-4, except that the thickness of the first magnetic unit and the thickness of the second magnetic unit were adjusted to 3 mm and 2 mm, respectively, as shown in Table 1 below.

**Example 1-11**

A hybrid-type magnetic unit and a wireless charging device comprising the same were obtained in the same manner as in Example 1-4, except that the thickness of the first magnetic unit and the thickness of the second magnetic unit were adjusted to 2 mm and 3 mm, respectively, as shown in Table 1 below.

**Example 1-12**

A hybrid-type magnetic unit and a wireless charging device comprising the same were obtained in the same manner as in Example 1-4, except that the thickness of the first magnetic unit and the thickness of the second magnetic unit were adjusted to 4.96 mm and 0.04 mm, respectively, as shown in Table 1 below.

**Comparative Example 1-1: Nanocrystalline magnetic material**

A wireless charging device was obtained using a nanocrystalline magnetic material (10.5 mm in thickness) of SKC as a magnetic unit as shown in Table 1 below.

**Comparative Example 1-2: First magnetic unit (PMB magnetic unit)**

A wireless charging device was obtained using the first magnetic unit (PMB magnetic unit, 10.5 mm in thickness) alone as a magnetic unit as shown in Table 1 below.

**Comparative Example 1-3: Ferrite-based magnetic material**

A wireless charging device was obtained using a PC-95 ferrite-based magnetic material (10.5 mm in thickness) of TDK as a magnetic unit as shown in Table 1 below.

**Comparative Example 1-4: Nanocrystalline magnetic material**

A wireless charging device was obtained using a nanocrystalline magnetic material (5 mm in thickness) of SKC as a magnetic unit as shown in Table 1 below.

**Comparative Example 1-5: Ferrite-based magnetic material**

A wireless charging device was obtained using a PC-95 ferrite-based magnetic material (5 mm in thickness) of TDK as a magnetic unit as shown in Table 1 below.

**Test Example**

**(1-1) Measurement of complex magnetic permeability**

The composite magnetic permeability (CP) represented by the following Equation 1 was calculated using the thickness and magnetic permeability of the first magnetic unit and the second magnetic unit used in the Examples and Comparative Examples. The results are shown in Table 1 below.

[Equation 1]

$$CP = \frac{1}{a} \times P1 \times \frac{T1}{T1+T2} + \frac{1}{b} \times P2 \times \frac{T2}{T1+T2}$$

Here, P1 is the magnetic permeability of the first magnetic unit,

P2 is the magnetic permeability of the second magnetic unit,
T1 is the thickness of a region in the first magnetic unit corresponding to the coil unit,
T2 is the thickness of a region in the second magnetic unit corresponding to the coil unit,
a is 1 when P1 is 10 to 1,000, 10 when P1 is greater than 1,000 to 8,000, or 20 when P1 is greater than 8,000 to 30,000, and
b is 1 when P2 is 10 to 1,000, 10 when P12 is greater than 1,000 to 8,000, or 20 when P2 is greater than 8,000 to 30,000.

**(1-2) Measurement of charging efficiency**

The charging efficiency was measured by SAE J2954 WPT2 Z2 class standard test method. Specifically, a coil unit and a frame under the SAE J2954 WPT2 Z2 class standard test specifications were used, and a magnetic unit having a thickness of 5T (mm), a spacer, and an aluminum plate were stacked to prepare a receiving pad (35 cm × 35 cm) and a transmitting pad (75 cm × 60 cm). The charging efficiency was evaluated under the same conditions of an output power of 6.6 kW at a frequency of 85 kHz for 10 minutes.

**(1-3) Heat generation test**

Heat generation of the magnetic unit was measured using a T/GUARD 405-SYSTEM manufactured by Qualitrol.

- Temperature from room temperature to 100°C: pass
- Temperature higher than 100°C to 200°C: fail

The results are shown in Table 1 below.

[Table 1]

|  | T1 (mm) | T2 (mm) | P1 | P2 | CP | Charging efficiency (%) | Heat generation test | Weight (kg) |
|---|---|---|---|---|---|---|---|---|
| Ex. 1-1 | 10.4 | 0.1 | 100 | 15,000 | 106.2 | 89.5 | pass | 4.2 |
| Ex. 1-2 | 10 | 0.5 | 100 | 15,000 | 131.0 | 88.0 | pass | 4.2 |
| Ex. 1-3 | 9.5 | 1 | 100 | 15,000 | 161.9 | 88.5 | pass | 4.5 |
| Ex. 1-4 | 9.5 | 1 | 100 | 3,200 | 121.0 | 89.8 | pass | 4.3 |
| Ex. 1-5 | 7.5 | 3 | 100 | 3,200 | 162.9 | 90.1 | pass | 4.9 |
| Ex. 1-6 | 4.9 | 0.1 | 100 | 15,000 | 113 | 89.5 | pass | 3.9 |
| Ex. 1-7 | 4.5 | 0.5 | 100 | 15,000 | 165 | 88.0 | pass | 4 |
| Ex. 1-8 | 4 | 1 | 100 | 15,000 | 230 | 88.5 | pass | 4.2 |
| Ex. 1-9 | 4 | 1 | 100 | 3,200 | 144 | 89.7 | pass | 4.0 |
| Ex. 1-10 | 3 | 2 | 100 | 3,200 | 188 | 90.0 | pass | 4.0 |
| Ex. 1-11 | 2 | 3 | 100 | 3,200 | 232 | 90.3 | pass | 4.1 |
| Ex. 1-12 | 4.96 | 0.04 | 100 | 3,200 | 101.8 | 86.4 | fail | 3.9 |
| C. Ex. 1-1 | 0 | 10.5 | - | 15,000 | - | 82.0 | fail | 6.5 |
| C. Ex. 1-2 | 10.5 | 0 | 100 | - | - | 86.2 | fail | 4.6 |
| C. Ex. 1-3 | 0 | 10.5 | - | 3,200 | - | 91 | pass | 5 |
| C. Ex. 1-4 | 0 | 5 | - | 15,000 | - | 82 | fail | 5.3 |

(continued)

|  | T1 (mm) | T2 (mm) | P1 | P2 | CP | Charging efficiency (%) | Heat generation test | Weight (kg) |
|---|---|---|---|---|---|---|---|---|
| C. Ex. 1-5 | 0 | 5 | - | 3,200 | - | 91.3 | pass | 4.2 |

As shown in Table 1 above, in the wireless charging devices of Examples 1-1 to 1-12 in which a hybrid-type magnetic unit of two or more types having different magnetic permeabilities was adopted as a magnetic unit, the magnetic flux density and heat dissipation were effectively distributed, thereby enhancing the wireless charging efficiency, along with excellent results in the heat generation test, as compared with the wireless charging devices of Comparative Examples 1-1 to 1-5 in which the first magnetic permeability or the second magnetic permeability alone was adopted.

In addition, in the wireless charging devices of Examples 1-1 to 1-12, the thicknesses and permeabilities of the first magnetic unit and the second magnetic unit were adjusted, whereby the magnetic unit satisfied a composite magnetic permeability (CP) of 10 to 290. Thus, it was possible to enhance the charging efficiency and heat generation reduction characteristics during wireless charging at high power.

In particular, charging efficiency could be further enhanced by adjusting the thickness ratio of the first magnetic unit and the second magnetic unit. The charging efficiency and heat generation reduction effect were maximized when the thickness ratio and magnetic permeability had appropriate values.

Specifically, as in Examples 1-1 to 1-3, even if the first magnetic unit and the second magnetic unit had the same permeability, the thickness ratio thereof was adjusted to change the composite magnetic permeability (CP) of the magnetic unit, whereby the charging efficiency was changed.

On the other hand, in the wireless charging devices of Comparative Examples 1-1 to 1-5 in which the first magnetic unit or the second magnetic unit alone was adopted, most of the initial efficiencies were lower than those of Examples 1-1 to 1-12, and the heat generation test results were not good, which were greater than 100°C.

Thus, it was possible to enhance the charging efficiency and heat generation reduction characteristics in an efficient way in Examples 1-1 and 1-12.

Meanwhile, according to another embodiment of the present invention, a wireless charging device was manufactured as follows.

### Example 2-1: Manufacture of a wireless charging device

### Step 1: Preparation of a first magnetic unit (PMB magnetic unit) having a three-dimensional structure

42.8 parts by weight of a magnetic powder, 15.4 parts by weight of a polyurethane-based resin dispersion (25% by weight of a polyurethane-based resin and 75% by weight of 2-butanone), 1.0 part by weight of an isocyanate-based curing agent dispersion (62% by weight of an isocyanate-based curing agent, 25% by weight of n-butyl acetate, and 13% by weight of 2-butanone), 0.4 part by weight of an epoxy-based resin dispersion (70% by weight of an epoxy-based resin, 3% by weight of n-butyl acetate, 15% by weight of 2-butanone, and 12% by weight of toluene), and 40.5 parts by weight of toluene were mixed in a planetary mixer at a speed of about 40 to 50 rpm for about 2 hours to prepare a magnetic powder slurry.

The magnetic powder slurry was injected into a mold (703) by an injection molding machine (702) as shown in Fig. 23 and molded to have a thickness shown in Table 2, which was dried at a temperature of about 140°C to obtain a first magnetic unit having a three-dimensional structure.

### Step 2: Preparation of a hybrid-type magnetic unit

A ferrite-based magnetic material (PC-95 ferrite magnetic sheet manufactured by TDK Co., Ltd., second magnetic unit) was disposed on the outermost part, corresponding to the coil unit, of the first magnetic unit prepared in step 1, which was then fixed by thermal compression to obtain a hybrid-type magnetic unit.

### Step 3: Manufacture of a wireless charging device

The hybrid-type magnetic unit of step 2 was used to obtain a wireless charging device comprising a coil unit comprising a conductive wire, the hybrid-type magnetic unit, and a shield unit. Here, the ferrite-based magnetic material (second magnetic unit) was disposed to face the shield unit. The wireless charging device may have a structure similar to that of Fig. 12.

### Example 2-2

A wireless charging device was prepared in the same manner as in Example 2-1, except that a nanocrystalline magnetic material (manufactured by Hitachi) was adopted as a second magnetic unit and that a spacer insert part (3 mm in thickness) was interposed between the second magnetic unit and the shield unit, as shown in Table 2. The wireless charging device has a structure similar to that of Fig. 8, and the spacer insert part was further adopted.

### Example 2-3

### Step 1: Preparation of a first magnetic unit (PMB magnetic unit) having a planar structure

The magnetic powder slurry prepared in step 1 of Example 2-1 was coated onto a carrier film by a comma coater, which was dried at a temperature of about 110°C to form a dried magnetic composite. The dried magnetic composite was compression-hardened by a hot press process for about 60 minutes at a temperature of about 170°C and a pressure of about 9 MPa to obtain a sheet-type magnetic composite. The content of magnetic powder in the magnetic composite thus prepared was about 90% by weight, and the thickness of a single sheet was about 100 $\mu$m. 40 to 50 of the sheets were laminated to obtain a first magnetic unit having a thickness of about 4 mm.

### Steps 2 and 3

A ferrite-based magnetic material (PC-95 ferrite magnetic sheet manufactured by TDK Co., Ltd., second magnetic unit) having a thickness of 1 mm was disposed on the first magnetic unit prepared in step 1, which was then thermocompression-bonded to obtain a hybrid-type magnetic unit. It was used to prepare a wireless charging device in the same manner as in Example 2-1. The wireless charging device may have a structure similar to that of Fig. 7.

### Example 2-4

A wireless charging device was prepared in the same manner as in Example 2-2, except that the first magnetic unit obtained in step 1 of Example 2-3 was adopted as the first magnetic unit and that the thickness of the nanocrystalline magnetic material (manufactured by Hitachi) as the second magnetic unit was adjusted to 1 mm. The wireless charging device may have a structure similar to that of Fig. 10.

### Comparative Example 2-1

A wireless charging device was prepared in the same manner as in Example 2-3, except that the first magnetic unit (5 mm in thickness) obtained in step 1 of Example 2-3 alone was adopted.

### Comparative Example 2-2

A wireless charging device was prepared in the same manner as in Example 2-3, except that the first magnetic unit obtained in step 1 of Example 2-3 was not adopted and that a ferrite-based magnetic material as the second magnetic unit (5 mm in thickness) alone was adopted.

### Test Example

### (2-1) Evaluation of the physical properties of a hybrid-type magnetic unit

The characteristics of the hybrid-type magnetic units of Examples 2-1 to 2-4, the polymer-type magnetic block (PMB) magnetic material of Comparative Example 2-1, and the ferrite-based magnetic material of Comparative Example 2-2 were compared in the following manner.

### Inductance

The inductance was measured using an LCR Meter (IM3533, HIOKI Co.). The results are shown in Table 2 below.
The second inductance in a state where only the second magnetic unit remained while the first magnetic unit was replaced with a spacer unit in the hybrid-type magnetic unit was measured for La. The first inductance in a state where only the first magnetic unit remained while the second magnetic unit was replaced with a spacer unit in the hybrid-type magnetic unit was measured for Lc.

**Iron loss**

- Basic measurement iron loss

Referring to Fig. 18, the first magnetic unit and the second magnetic unit having an outer diameter (Od) of 50 mm, an inner diameter (Id) of 30 mm, and a thickness ($T_M$) of 4 mm were each measured at 100 kHz and 100 mT using a B-H meter (B-H Analyzer).
Specifically, the wireless charging devices of the Examples and Comparative Examples were each measured for dimensions and weights, and relative densities were calculated. In addition, the strength of the wireless charging devices was measured. In addition, basic measurement iron loss was measured at a frequency of 100 kHz and DC magnetization and magnetic flux density of 0.1 T using a DC and AC B-H measuring instrument.

- Composite iron loss (Ci)

The composite iron loss represented by the following Equation 2 was calculated from the inductance and basic measured iron loss obtained above.

$$[\text{Equation 2}]$$
$$Ci = 0.51 \times Lt \times (a/La + c/Lc)$$

In Equation 2, a is the iron loss per measurement unit of the second magnetic unit,

c is the iron loss per measurement unit of the first magnetic unit,
Lt is the inductance measured in a state in which the first magnetic unit and the second magnetic unit are installed,
La is the second inductance, and
Lc is the first inductance.

**(2-2) Measurement of charging efficiency**

It was measured in the same manner as in Test Example 1-2.

**(2-3) Measurement of magnetic permeability**

Magnetic permeability was measured at a frequency of 85 kHz using an impedance analyzer (4294A from Agilent).
The size and thickness of each component shown in Figs. 7, 8, 10, and 12 are exaggerated for illustration. For the specific thickness of each magnetic unit in this embodiment, refer to Table 2 below.

[Table 2]

| | | | Ex. 2-1 | Ex. 2-2 | Ex. 2-3 | Ex. 2-4 | C. Ex. 2-1 | C. Ex. 2-2 |
|---|---|---|---|---|---|---|---|---|
| Thickness of magnetic unit (mm) | Ferrite -based | Outer part | 1 mm | - | 1 mm | - | - | 5 mm |
| | | Central part | - | - | 1 mm | - | - | 5 mm |
| | Nanocrystalline | Outer part | - | 0.5 mm | - | 1 mm | - | - |
| | | Central part | - | - | - | - | - | - |
| | PMB | Outer part | 9 mm | 4.5 mm | 4 mm | 4 mm | 5 mm | - |
| | | Central part | 4 mm | 1 mm | 4 mm | 4 mm | 5 mm | - |
| Equation 2 | | | $Ci = 0.51 \times Lt \times (a/La + c/Lc)$ | | | | | |
| Composite iron loss of Eq. 2 (Ci) (W/m³) | | | 617.9 | 1,124.5 | 1,108 | 1,188 | 2,000 | 88 |
| a (W/m³) | | | 88 | 200 | 88 | 200 | - | 88 |
| c (W/m³) | | | 1,100 | 2,000 | 2,000 | 2,000 | 2,000 | - |
| La (µH) | | | 38.0 | 40 | 41.7 | 40.7 | - | 44 |
| Lc (µH) | | | 42.0 | 40.7 | 40.3 | 40.3 | 40.8 | - |
| Lt (µH) | | | 42.5 | 43 | 42 | 42.7 | 40.8 | 44 |
| Weight (kg) | | | 4 | 3.9 | 4 | 4 | 3.9 | 4.2 |
| Charging efficiency (%) | | | 90 | 88.7 | 90.1 | 88.3 | 85 | 90.0 |

a: Iron loss per measurement unit of the second magnetic unit (ferrite-based or nanocrystalline magnetic material) measured at 100 kHz

c: Iron loss per measurement unit of the first magnetic unit (PMB) measured at 100 kHz

La: second inductance

Lc: first inductance

Lt: inductance measured in a state in which the first magnetic unit and the second magnetic unit are installed

As shown in Table 2 above, in the wireless charging devices of Examples 2-1 to 2-4 in which a hybrid-type magnetic unit comprising a first magnetic unit and a second magnetic unit was adopted, the second inductance and the first inductance were different from each other, and the composite iron loss (Ci) represented by Equation 2 was 1,200 W/m³ or less. As a result, the charging efficiency was improved.

In particular, in Example 2-1 in which a hybrid-type magnetic unit having a thickness of 10 mm as a magnetic unit was adopted, the thickness of the magnetic unit was increased to form a magnetic field of the same size, and the iron loss per measurement unit of the first magnetic unit (PMB) measured at 100 kHz was reduced to 1,100 W/m³. As a result, the composite iron loss (Ci) was significantly decreased to 617.9 W/m³.

In addition, in Examples 2-2 to 2-4 in which a hybrid-type magnetic unit having a thickness of 5 mm as a magnetic unit was adopted, the composite iron loss (Ci) was 1,108 W/m³ to 1,188 W/m³.

On the other hand, in the wireless charging device of Comparative Example 2-1 in which the first magnetic unit (PMB) alone was adopted as a magnetic unit, the iron loss was 2,000 W/m3, which was significantly higher than that of the wireless charging devices of Examples 2-1 to 2-4. As a result, the charging efficiency was deteriorated.

Meanwhile, in the wireless charging device of Comparative Example 2-2 in which the second magnetic unit (ferrite-based) alone was adopted as a magnetic unit, the charging efficiency was similar to Example 2-1, whereas the weight was increased, in which case, there may be a problem in the process and it is not preferable in terms of cost effectiveness.

Accordingly, when the wireless charging devices of Examples 2-1 to 2-4 are used, the charging efficiency and heat generation reduction characteristics could be enhanced in an efficient way.

Meanwhile, according to another still embodiment of the present invention, a wireless charging device was manufactured as follows.

The wireless charging devices of Examples 3-1 and 3-2 and Comparative Examples 3-1 to 3-3 may be provided referring to Fig. 20. In Fig. 20, however, some components are exaggerated, omitted, or schematically illustrated, and the size of each component does not fully reflect the actual size.

## Example 3-1

### Step 1: Preparation of a first magnetic unit (PMB magnetic unit) having a three-dimensional structure

10% by weight of a polyamide resin (product name: L1724k, manufacturer: Daicel-Evonik) as a binder resin, 85% by weight of sendust (product name: C1F-02A, manufacturer: Crystallite Technology) as a filler, and 5% by weight of phosphoric acid and silane as additives were used to prepare pellets in an extruder under the conditions of a temperature of about 170 to 200°C and 120 to 150 rpm. The pellets were injected in an injection machine at a temperature of about 250°C to obtain a first magnetic unit (300) having a three-dimensional structure with a thickness of 5 mm.

### Step 2: Preparation of a hybrid-type magnetic unit

A ferrite-based magnetic material (PC-95 ferrite magnetic sheet manufactured by TDK, second magnetic unit; 5 mm in thickness) (500) was inserted into the first magnetic unit (300) prepared in step 1, which was then fixed by thermal compression to obtain a hybrid-type magnetic unit having a structure in which the circumferential surface of the second magnetic unit (500) was surrounded by the first magnetic unit (300).

### Step 3: Manufacture of a wireless charging device

The hybrid-type magnetic unit of step 2 was used to obtain a wireless charging device (Fig. 20(a)) comprising a coil unit (200) comprising a conductive wire, the hybrid-type magnetic unit (300, 500), and a shield unit (400).

## Example 3-2

A wireless charging device (Fig. 20(b)) comprising a coil unit (200) comprising a conductive wire, the hybrid-type magnetic unit (300, 500), and a shield unit (400) was obtained in the same manner as of Example 3-1 while the first magnetic unit (300) having a three-dimensional structure was prepared in the same manner as in Example 3-1, except that the first magnetic unit and the second magnetic unit (ferrite-based magnetic material; PC-95 ferrite magnetic sheet manufactured by TDK) inserted into the first magnetic unit were placed in contact with the shield unit (400) and that the thicknesses of the first magnetic unit and the second magnetic unit were adjusted to 5 mm and 3 mm, respectively.

## Comparative Example 3-1

The first magnetic unit (5 mm in thickness) obtained in step 1 of Example 3-1 alone was used as a magnetic unit to obtain a wireless charging device (Fig. 20(c)) comprising a coil unit (200) comprising a conductive wire, the first magnetic unit (300), and a shield unit (400).

## Comparative Example 3-2

The first magnetic unit obtained in step 1 of Example 3-1 was not used, and a nanocrystalline magnetic material (FINEMET FT3 of Hitachi, second magnetic unit; 5 mm in thickness) alone was used to obtain a wireless charging device (Fig. 20(d)) comprising a coil unit (200) comprising a conductive wire, the second magnetic unit (500), and a shield unit (400).

## Comparative Example 3-3

A wireless charging device (Fig. 20(e)) comprising a coil unit (200) comprising a conductive wire, the hybrid-type magnetic unit (300, 500), and a shield unit (400) was obtained in the same manner as of Example 3-1, except that the ferrite-based magnetic material (PC-95 ferrite magnetic sheet of TDK, second magnetic part) was disposed such that the circumferential surface of the first magnetic unit (300) was surrounded by the second magnetic unit (500) as shown in Fig. 20(e).

**Test Example**

**(3-1) Measurement of heat generation temperature**

The wireless charging devices obtained in the Examples and Comparative Examples were each placed in a housing to obtain a wireless charging device.

The surface temperature of the wireless charging device was measured under the SAE J2954 WPT2 Z2 class Standard TEST charging efficiency measurement conditions when the coil unit received wireless power having a frequency of 85 kHz and an output of 6.6 kW for 30 minutes.

Specifically, the surface temperature of the magnetic unit was measured using a T/GUARD 405-SYSTEM of Qualitrol based on the center (maximum heat generation temperature) of the position corresponding to the coil unit among the lower surfaces of the magnetic units of the Examples and Comparative Examples (heat generation temperature (T), see Fig. 20).

**(3-2) Measurement of charging efficiency**

It was measured in the same manner as in Test Example 1-2.

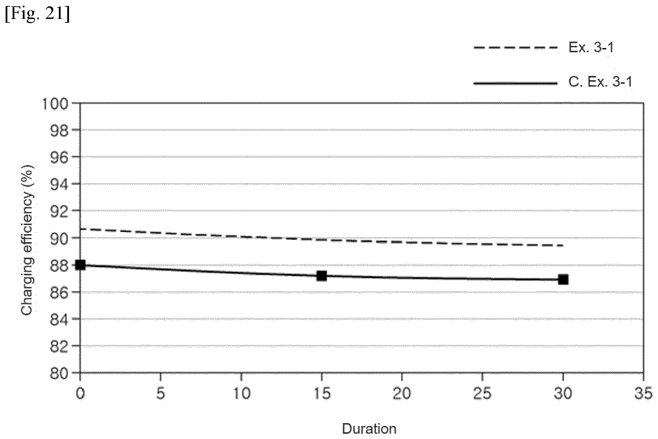

The results are shown in Table 3 below and Figs. 21 and 22.

[Table 3]

| Wireless charging duration (minute) | | Ex. 3-1 (a) | Ex. 3-2 (b) | C. Ex. 3-1 (c) | C. Ex. 3-2 (d) | C. Ex. 3-3 (e) |
|---|---|---|---|---|---|---|
| 0 | Heat generation temp. (°C) | 21 | 21 | 21 | 21 | 21 |
| | Charging efficiency (%) | 90.7 | 91.2 | 88 | 88 | 88.3 |
| 15 | Heat generation temp. (°C) | 61.9 | 58.2 | 68.4 | 105 | 73 |
| | Charging efficiency (%) | 89.9 | 90.4 | 87.2 | 84 | 87.6 |
| 30 | Heat generation temp. (°C) | 88.3 | 86.1 | 100 | 140 | 110 |
| | Charging efficiency (%) | 89.5 | 89.9 | 87 | 79 | 87 |

As shown in Table 3 and Figs. 21 and 22, in the wireless charging devices of Examples 3-1 and 3-2 in which a hybrid-type magnetic unit of two types having different magnetic permeabilities was adopted, and the second magnetic unit having a magnetic permeability higher than that of the first magnetic unit was disposed at the center of the magnetic unit, the magnetic flux and heat generation were evenly distributed, whereby it was possible to efficiently enhance the heat generation reduction characteristics and wireless charging efficiency, as compared with the wireless charging device of Comparative Example 3-1 in which the first magnetic unit alone was adopted, the wireless charging device of Comparative Example 3-2 in which the second magnetic unit alone was adopted, and the wireless charging device of Comparative Example 3-3 in which a hybrid-type magnetic unit having a structure different from the present invention was adopted.

Specifically, when the coil unit received wireless power having a frequency of 85 kHz and an output of 6.6 kW for 30 minutes, in the wireless charging devices of Examples 3-1 and 3-2, the heat generation temperature of the magnetic unit was lower than that of the magnetic unit of Comparative Examples 3-1 to 3-3 by about 12°C to 80°C. In addition, when wireless power was transmitted for 30 minutes, the charging efficiencies of the wireless charging devices of Examples 3-1 and 3-2 were about 89.5% and about 89.9%, respectively, whereas the charging efficiency of the wireless charging device of Comparative Example 3-1 was 87%, the charging efficiency of the wireless charging device of Comparative Example 3-2 was 79%, and the charging efficiency of the wireless charging device of Comparative Example 3-3 was 87%, indicating that the charging efficiency charging efficiency of the wireless charging devices of Examples 3-1 and 3-2 was significantly enhanced.

In particular, in the wireless charging device of Example 3-1, about 26.4°C was increased from the heat generation temperature ($T_{15}$) of the upper surface of the magnetic unit when wireless power was transmitted for 15 minutes to the heat generation temperature ($T_{30}$) of the lower surface of the magnetic unit when wireless power was transmitted for 30 minutes. In contrast, in the wireless charging device of Comparative Example 3-1, about 31.6°C was increased from $T_{15}$ to $T_{30}$, indicating that the heat generation temperature was steeply increased.

Meanwhile, in the wireless charging device of Example 3-2 in which the first magnetic unit and the second magnetic unit were in contact with the shield unit, the charging efficiency was enhanced as compared with the wireless charging device of Example 3-1 in which the magnetic units were not in contact with the shield unit.

In contrast, in the wireless charging device of Comparative Example 3-3 in which a hybrid-type structure comprising a first magnetic unit and a second magnetic unit was adopted while the circumferential surface of the first magnetic unit was surrounded by the second magnetic unit, the heat generation reduction characteristics and wireless charging efficiency were enhanced as compared with the wireless charging devices of Comparative Examples 3-1 and 3-2, whereas the heat generation reduction characteristics and wireless charging efficiency were lowered as compared with the wireless charging devices of Examples 3-1 and 3-2.

Accordingly, the charging efficiency and heat generation reduction characteristics of a wireless charging device can be enhanced in an efficient way according to an embodiment of the present invention.

<Explanation of Reference Numerals>

| | | | | |
|---|---|---|---|---|
| 1: | transportation means (electric vehicle) | | | |
| 10: | wireless charging device | | | |
| 100: | support unit | 200: | coil unit | |
| 300: | first magnetic unit | 310: | outer part | |
| 320: | central part | 400: | shield unit | |
| 500: | second magnetic unit | | | |
| 510: | upper surface | | | |
| 520: | lower surface | 530: | circumferential surface | |
| 600: | housing | | | |
| 700: | spacer unit | 750: | spacer insert part | |
| 701: | raw material composition | 702: | injection molding machine | |
| 703: | mold | | | |
| 720: | receiver | 730: | transmitter | |
| A-A': | cutting line | | | |
| B-B': | cutting line | | | |
| C-C': | cutting line | | | |
| Id: | inner diameter of a magnetic unit | | | |
| Od: | outer diameter of a magnetic unit | | | |
| $T_M$: | thickness of a magnetic unit | | | |
| T1: | thickness of a region in the first magnetic unit corresponding to the coil unit. | | | |
| T2: | thickness of a region in the second magnetic unit corresponding to the coil unit | | | |
| T: | heat generation temperature (measurement position) | | | |

**Claims**

1. A wireless charging device, which comprises a coil unit; and a magnetic unit disposed on the coil unit, wherein the magnetic unit comprises a first magnetic unit disposed on the coil unit; and a second magnetic unit disposed adjacent to the first magnetic unit and having a magnetic permeability different from that of the first magnetic unit.

2. The wireless charging device of claim 1, wherein the composite magnetic permeability (CP) represented by the following Equation 1 in the magnetic unit is 101 to 290:

[Equation 1]

$$CP = \frac{1}{a} \times P1 \times \frac{T1}{T1+T2} + \frac{1}{b} \times P2 \times \frac{T2}{T1+T2}$$

in Equation 1,

P1 is the magnetic permeability of the first magnetic unit,
P2 is the magnetic permeability of the second magnetic unit,
T1 is the thickness of a region in the first magnetic unit corresponding to the coil unit,
T2 is the thickness of a region in the second magnetic unit corresponding to the coil unit,
a is 1 when P1 is 10 to 1,000; 10 when P1 is greater than 1,000 to 8,000; or 20 when P1 is greater than 8,000 to 30,000, and
b is 1 when P2 is 10 to 1,000; 10 when P12 is greater than 1,000 to 8,000; or 20 when P2 is greater than 8,000 to 30,000.

3. The wireless charging device of claim 2, wherein P1 is 50 to 200, P2 is 2,000 to 5,000, T1 is 1 mm to 10 mm, and T2 is 0.04 mm to 5 mm; or
P1 is 50 to 200, P2 is 12,000 to 18,000, T1 is 1 mm to 11 mm, and T2 is 0.02 mm to 3 mm.

4. The wireless charging device of claim 1, wherein the magnetic permeability of the second magnetic unit is greater than the magnetic permeability of the first magnetic unit, and
the thickness of a region corresponding to the coil unit in the first magnetic unit is greater than the thickness of a region corresponding to the coil unit in the second magnetic unit.

5. The wireless charging device of claim 1, which further comprises a shield unit disposed on the magnetic unit,

wherein the second magnetic unit is disposed between the shield unit and the first magnetic unit, and
the second magnetic unit is thermally connected to, and electrically insulated from, the shield unit.

6. The wireless charging device of claim 1, wherein the first magnetic unit comprises a polymer-type magnetic block (PMB) comprising a binder resin and a magnetic powder dispersed in the binder resin, and
the second magnetic unit comprises a ferrite-based magnetic material, a nanocrystalline magnetic material, or a combination thereof.

7. A wireless charging device, which comprises a coil unit; and a magnetic unit disposed on the coil unit,

wherein the magnetic unit comprises a first magnetic unit disposed on the coil unit; and a second magnetic unit disposed adjacent to the first magnetic unit, and
a second inductance in a state where only the second magnetic unit remains and a first inductance in a state where only the first magnetic unit remains are different from each other.

8. The wireless charging device of claim 7, wherein the composite iron loss (Ci) of the magnetic unit according to the following Equation 2 is 1,200 W/m$^3$ or less:

[Equation 2]

$$Ci = 0.51 \times Lt \times (a/La + c/Lc)$$

in Equation 2,

a is the iron loss per measurement unit of the second magnetic unit,

c is the iron loss per measurement unit of the first magnetic unit,
Lt is the inductance measured in a state in which the first magnetic unit and the second magnetic unit are installed,
La is the second inductance, and
Lc is the first inductance.

9. The wireless charging device of claim 7, wherein the first magnetic unit comprises a magnetic powder and a binder,

the second magnetic unit comprises a nanocrystalline magnetic material, and the composite iron loss (Ci) is greater than 700 $W/m^3$ to 1,200 $W/m^3$; or
the second magnetic unit comprises a ferrite-based magnetic material, and the composite iron loss (Ci) is 300 $W/m^3$ to less than 1,120 $W/m^3$.

10. The wireless charging device of claim 8, which satisfies at least one selected from the following characteristics:

a being 500 $W/m^3$ or less;
c being 500 $W/m^3$ or more;
Lt being 25 to 60 $\mu$H;
La being 35 to 60 $\mu$H;
Lc being 35 to 55 $\mu$H;
a/La being 1 $W/m^3$ to 8 $W/m^3$; and
c/Lc being 20 $W/m^3$ to 100 $W/m^3$.

11. The wireless charging device of claim 7, which satisfies at least one selected from the following characteristics:

the first magnetic unit having a thickness of 2 mm to 12 mm and a volume of 100 $cm^3$ to 1,500 $cm^3$;
the second magnetic unit having a thickness of 0.04 mm to 5 mm and a volume of 1 $cm^3$ to 900 $cm^3$;
the first magnetic unit and the second magnetic unit having a thickness ratio of 1:0.01 to 0.6 and a volume ratio of 1:0.01 to 0.6;
the first magnetic unit having a magnetic permeability of 5 to 500 and a magnetic permeability loss of 0 to 50 at 85 kHz; and
the second magnetic unit having a magnetic permeability of 1,000 to 20,000 and a magnetic permeability loss of 0 to 500 at 85 kHz.

12. A wireless charging device, which comprises a coil unit; and a magnetic unit disposed on the coil unit,

wherein the magnetic unit comprises a first magnetic unit and a second magnetic unit,
the second magnetic unit is located at the center of the magnetic unit,
the entire surface or a circumferential surface of the second magnetic unit is surrounded by the first magnetic unit, and
the magnetic permeability of the second magnetic unit is higher than the magnetic permeability of the first magnetic unit.

13. The wireless charging device of claim 12, wherein the first magnetic unit comprises a magnetic powder and a binder resin and has a magnetic permeability of 5 to 500 at 85 kHz, and
the second magnetic unit comprises a ferrite-based magnetic material, a nanocrystalline magnetic material, or a combination thereof and has a magnetic permeability of greater than 500 to 150,000 at 85 kHz.

14. The wireless charging device of claim 12, which satisfies at least one selected from the following characteristics:

the maximum cross-sectional area of the second magnetic unit in a horizontal direction being 10% to 40% of the total cross-sectional area of the magnetic unit;
the amount of heat generated by the second magnetic unit being higher than the amount of heat generated by the first magnetic unit when the coil unit receives wireless power from the outside; and
when the magnetic unit transmits wireless power having a frequency of 85 kHz and an output of 6.6 kW to the coil unit for 15 minutes, and the heat generation temperature of the upper surface of the magnetic unit is $T_{15}$, and when the wireless power is transmitted for 30 minutes, and the heat generation temperature of the lower surface of the magnetic unit is $T_{30}$, it being further increased from $T_{15}$ to $T_{30}$ by 30°C or less.

**15.** A transportation means, which comprises the wireless charging device according to any one of claims 1, 7, and 12.

[Fig. 1]

<u>10</u>

400

500

300

600

200

100

[Fig. 2]

[Fig. 3]

[Fig. 4]

<u>10</u>

[Fig. 5]

<u>10</u>

[Fig. 6]

[Fig. 7]

A - A'

[Fig. 8]

B – B'

[Fig. 9]

[Fig. 10]

[Fig. 11]

[Fig. 12]

[Fig. 13]

[Fig. 14]

C – C'

[Fig. 15]

[Fig. 16]

[Fig. 17]

[Fig. 18]

[Fig. 19]

<u>500</u>

(a)

(b)

[Fig. 20]

[Fig. 21]

[Fig. 22]

[Fig. 23]

[Fig. 24]

| INTERNATIONAL SEARCH REPORT | International application No. |
|---|---|
| | **PCT/KR2021/009730** |

**A. CLASSIFICATION OF SUBJECT MATTER**

**H01F 27/22**(2006.01)i; **H01F 38/14**(2006.01)i; **H02J 50/10**(2016.01)i; **H01F 1/20**(2006.01)i; **H01F 1/36**(2006.01)i; **H02J 50/70**(2016.01)i; **B60L 53/12**(2019.01)i; **H02J 50/00**(2016.01)i

According to International Patent Classification (IPC) or to both national classification and IPC

**B. FIELDS SEARCHED**

Minimum documentation searched (classification system followed by classification symbols)

H01F 27/22(2006.01); B60L 53/12(2019.01); H02J 50/10(2016.01); H02J 7/02(2006.01); H05K 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무선충전(wireless charging), 코일(coil), 자성부(magnetic unit), 투자율(permeability), 인덕턴스(inductance), 철손(iron loss)

**C. DOCUMENTS CONSIDERED TO BE RELEVANT**

| Category* | Citation of document, with indication, where appropriate, of the relevant passages | Relevant to claim No. |
|---|---|---|
| X | KR 10-2015-0076143 A (LG INNOTEK CO., LTD.) 06 July 2015 (2015-07-06)<br>See paragraphs [0021]-[0033]; claims 2 and 8-9; and figures 4a-4b. | 1,4,6-7,15 |
| Y | | 2,5,12,14 |
| A | | 3,8-11,13 |
| Y | KR 10-2016-0008996 A (AMOTECH CO., LTD.) 25 January 2016 (2016-01-25)<br>See paragraphs [0027] and [0029]; claims 2-3; and figure 1. | 2 |
| Y | KR 10-2019-0106082 A (LG ELECTRONICS INC.) 18 September 2019 (2019-09-18)<br>See paragraph [0151]; and figure 7. | 5 |
| Y | WO 2017-023080 A1 (AMOSENSE CO., LTD.) 09 February 2017 (2017-02-09)<br>See paragraphs [0029]-[0030] and [0097]; and figure 4a. | 12,14 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **10 November 2021** | **10 November 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2021/009730** |

**C.      DOCUMENTS CONSIDERED TO BE RELEVANT**

| Category* | Citation of document, with indication, where appropriate, of the relevant passages | Relevant to claim No. |
| --- | --- | --- |
| PX | KR 10-2280727 B1 (SKC CO., LTD.) 23 July 2021 (2021-07-23)<br>See paragraphs [0027]-[0167]; and figures 1-5. | 1-7,11,15 |

Form PCT/ISA/210 (second sheet) (July 2019)

**INTERNATIONAL SEARCH REPORT**
**Information on patent family members**

International application No.

**PCT/KR2021/009730**

| Patent document cited in search report | | | Publication date (day/month/year) | Patent family member(s) | | | Publication date (day/month/year) |
|---|---|---|---|---|---|---|---|
| KR | 10-2015-0076143 | A | 06 July 2015 | KR | 10-1490513 | B1 | 05 February 2015 |
| | | | | KR | 10-1496353 | B1 | 02 March 2015 |
| | | | | KR | 10-1579238 | B1 | 24 December 2015 |
| | | | | KR | 10-1579244 | B1 | 24 December 2015 |
| | | | | KR | 10-1738132 | B1 | 22 May 2017 |
| | | | | KR | 10-1792134 | B1 | 31 October 2017 |
| KR | 10-2016-0008996 | A | 25 January 2016 | KR | 10-1685168 | B1 | 09 December 2016 |
| | | | | WO | 2016-010372 | A1 | 21 January 2016 |
| KR | 10-2019-0106082 | A | 18 September 2019 | CN | 210111625 | U | 21 February 2020 |
| WO | 2017-023080 | A1 | 09 February 2017 | CN | 107912075 | A | 13 April 2018 |
| | | | | KR | 10-1693538 | B1 | 06 January 2017 |
| | | | | KR | 10-1697303 | B1 | 17 January 2017 |
| | | | | KR | 10-1697304 | B1 | 17 January 2017 |
| | | | | US | 10566824 | B2 | 18 February 2020 |
| | | | | US | 2018-0219400 | A1 | 02 August 2018 |
| KR | 10-2280727 | B1 | 23 July 2021 | KR | 10-2021-0061720 | A | 28 May 2021 |
| | | | | KR | 10-2293776 | B1 | 25 August 2021 |
| | | | | WO | 2021-086125 | A1 | 06 May 2021 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110042403